(19)

**Europäisches Patentamt**

**European Patent Office**

**Office européen des brevets**

(11) **EP 4 554 324 A1**

(12) **EUROPEAN PATENT APPLICATION**

(43) Date of publication:
14.05.2025 Bulletin 2025/20

(21) Application number: 24211511.1

(22) Date of filing: 07.11.2024

(51) International Patent Classification (IPC):
*H04W 88/08* (2009.01)    *H04W 72/52* (2023.01)
*H04W 72/542* (2023.01)

(52) Cooperative Patent Classification (CPC):
**H04W 88/085; H04W 72/52; H04W 72/542**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.11.2023  IN 202321076223
04.11.2024  US 202418936587**

(71) Applicant: **Mavenir Systems, Inc.
Richardson, TX 75081 (US)**

(72) Inventors:
• **Bejjipuram, Sombabu
535557 Balijipeta Mandal (IN)**
• **Taneja, Mukesh
560037 Bangalore (IN)**

(74) Representative: **Studio Torta S.p.A.
Via Viotti, 9
10121 Torino (IT)**

(54) **OPTIMIZED RADIO RESOURCE MANAGEMENT USING MACHINE LEARNING APPROACHES IN O-RAN NETWORKS**

(57) A method for performing optimized radio resource management (RRM) in an O-RAN network, includes: performing, at the RRM analytics module, a machine learning-based analysis to determine an optimal resource allocation policy based on at least one performance measurement performed at a distributed unit (DU); receiving, by the DU, the optimal resource allocation policy determined by the RRM; and utilizing, by the DU, the optimal resource allocation policy to one of schedule or not schedule user equipments (UEs). In a given slot and for a given state of the base station, candidate UEs to serve in the slot are selected based on a chosen policy. If the number of selected candidate UEs is higher than the maximum number the base station can serve in that slot, the radio resource management (RRM) module selects, using the chosen policy, the maximum number of UEs, and the selected UEs are allocated resources.

Fig. 26

EP 4 554 324 A1

**Description**

BACKGROUND OF THE DISCLOSURE

1. Field of the Disclosure

The present disclosure is related to 5G wireless networks, and relates more particularly to optimized radio resource management using machine learning approaches in O-RAN networks.

2. Description of Related Art

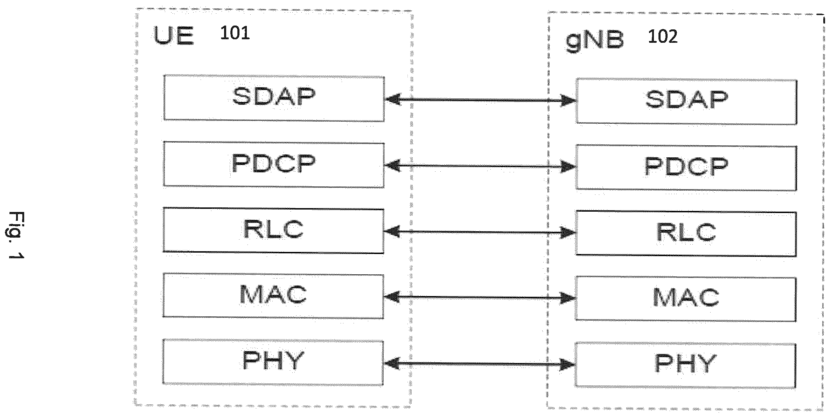

In the following sections, overview of Next Generation Radio Access Network (NG-RAN) architecture and 5G New Radio (NR) stacks will be discussed. 5GNR (New Radio) user and control plane functions with monolithic gNB (gNodeB) are shown in FIGS. 1, 2 and 3. For the user plane (shown in FIG. 1, which is in accordance with 3GPP TS 38.300), PHY (physical), MAC (Medium Access Control), RLC (Radio Link Control), PDCP (Packet Data Convergence Protocol) and SDAP (Service Data Adaptation Protocol) sublayers originate in the UE 101 and are terminated in the gNB 102 on the network side.

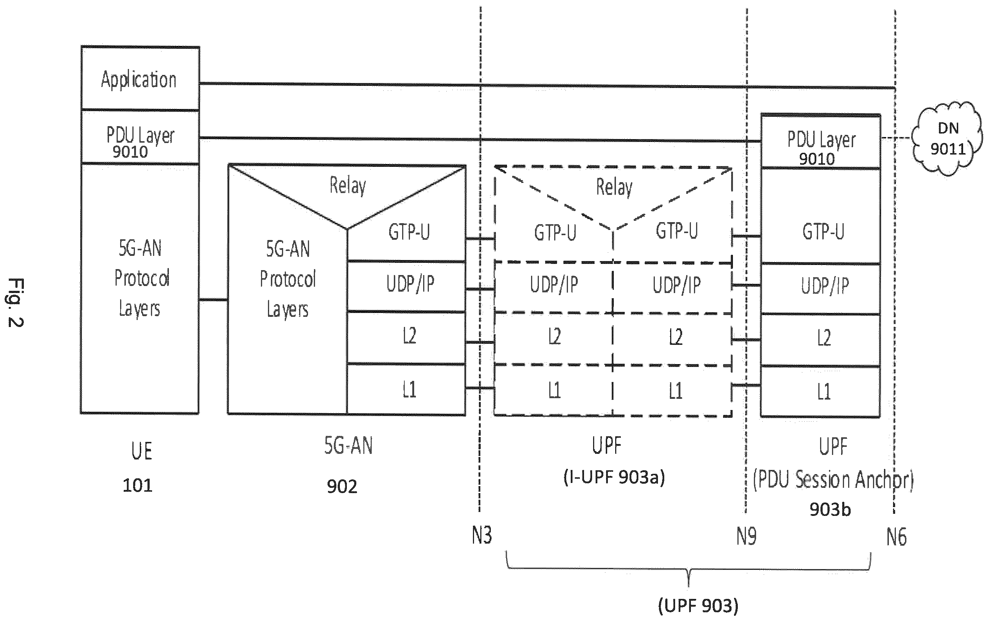

In addition, as shown in FIG. 2 (which is accordance with 3GPP TS 23.501), which is a block diagram illustrating the user plane protocol stacks for a PDU session of 5G NR, the Protocol Data Unit (PDU) layer 9010 corresponds to the PDU carried between the user equipment (UE) 101 and the data network (DN) 9011 over the PDU session. As shown in FIG. 2, UE 101 is connected to the 5G access network (AN) 902, which AN 902 is in turn connected via the N3 interface to the Intermediate UPF (I-UPF) 903a portion of the UPF 903, which I-UPF 903a is in turn connected via the N9 interface to the PDU session anchor 903b portion of the UPF 903, and which PDU session anchor 903b is connected to the DN 9011. The PDU session can correspond to Internet Protocol version 4 (IPv4), IPv6, or both types of IP packets (IPv4v6). General Packet Radio Services (GPRS) Tunneling Protocol - User Plane (GTP-U) shown in FIG. 2 supports tunnelling user plane data over N3 and N9 interfaces and provides encapsulation of end user PDUs for N3 and N9 interfaces.

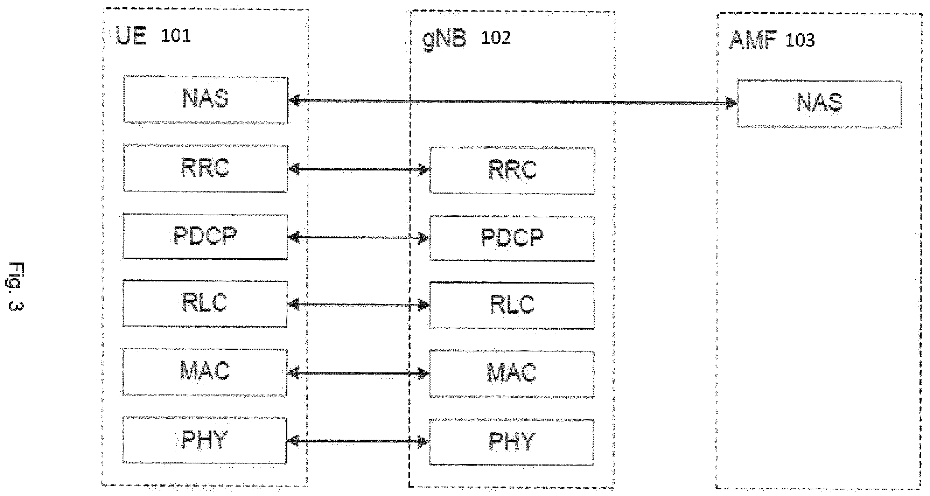

For the control plane (shown in FIG. 3, which is in accordance with 3GPP TS 38.300), RRC (Radio Resource Control), PDCP, RLC, MAC and PHY sublayers originate in the UE 101 and are terminated in the gNB 102 on the network side, and NAS (Non-Access Stratum) originate in the UE 101 and is terminated in the AMF (Access Mobility Function) 103 on the network side.

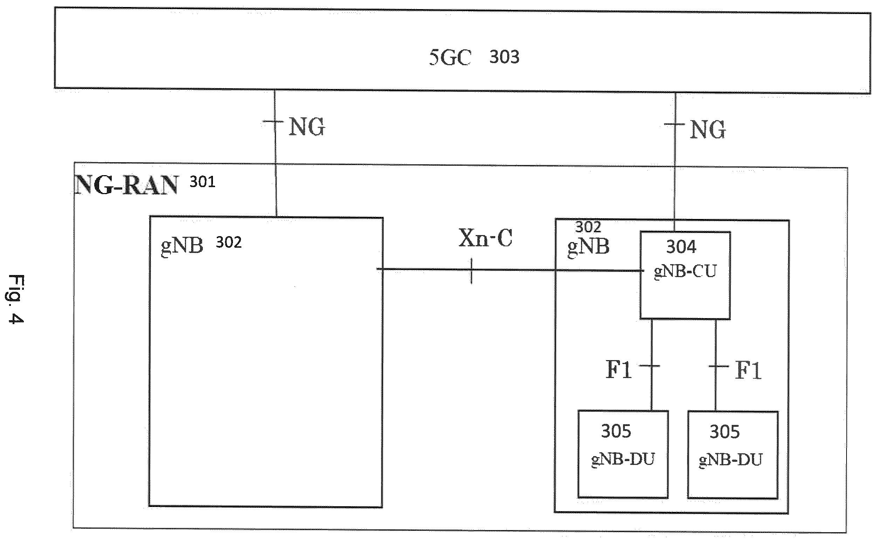

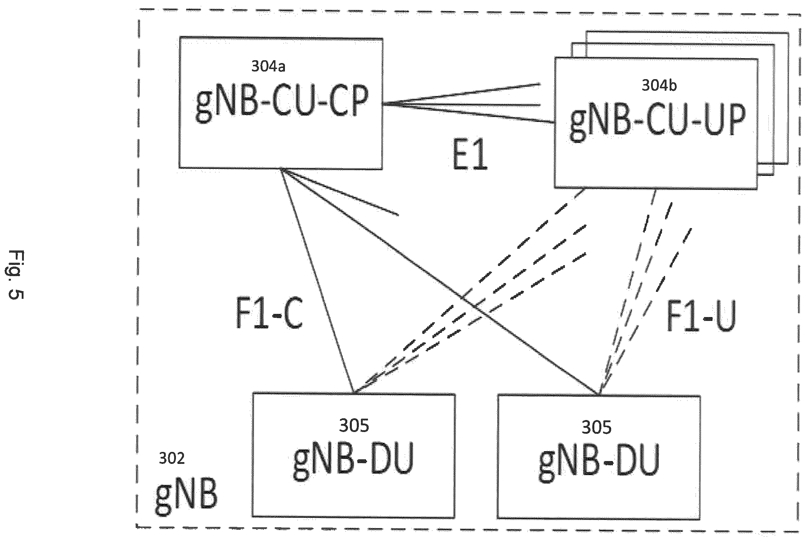

NG-Radio Access Network (NG-RAN) architecture from 3GPP TS 38.401 is shown in FIGS. 4-5. As shown in FIG. 4, the NG-RAN consists of a set of gNBs connected to the 5GC through the NG interface. As shown in FIG. 4, the NG-RAN 301 consists of a set of gNBs 302 connected to the 5GC 303 through the NG interface. Each gNB comprises gNB-CU 304 and one or more gNB-DU 305 (see FIG. 4). As shown in FIG. 5 (which illustrates separation of CU-CP (CU-Control Plane) and CU-UP (CU-User Plane)), E1 is the interface between gNB-CU-CP (CU-Control Plane) 304a and gNB-CU-UP (CU-User Plane) 304b, F1-C is the interface between gNB-CU-CP 304a and gNB-DU 305, and F1-U is the interface between gNB-CU-UP 304b and gNB-DU 305. As shown in FIG. 5, gNB 302 can consist of a gNB-CU-CP 304a, multiple gNB-CU-UPs (or gNB-CU-UP instances) 304b and multiple gNB-DUs (or gNB-DU instances) 305. One gNB-DU 305 is connected to only one gNB-CU-CP 304a, and one gNB-CU-UP 304b is connected to only one gNB-CU-CP 304a.

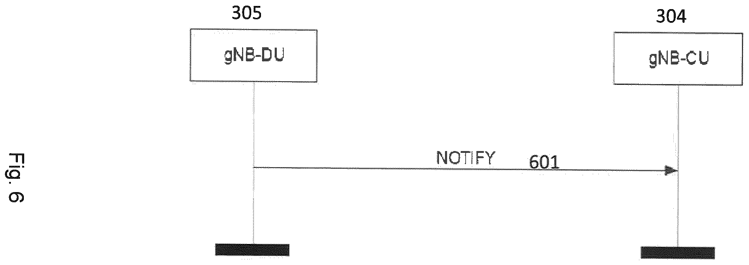

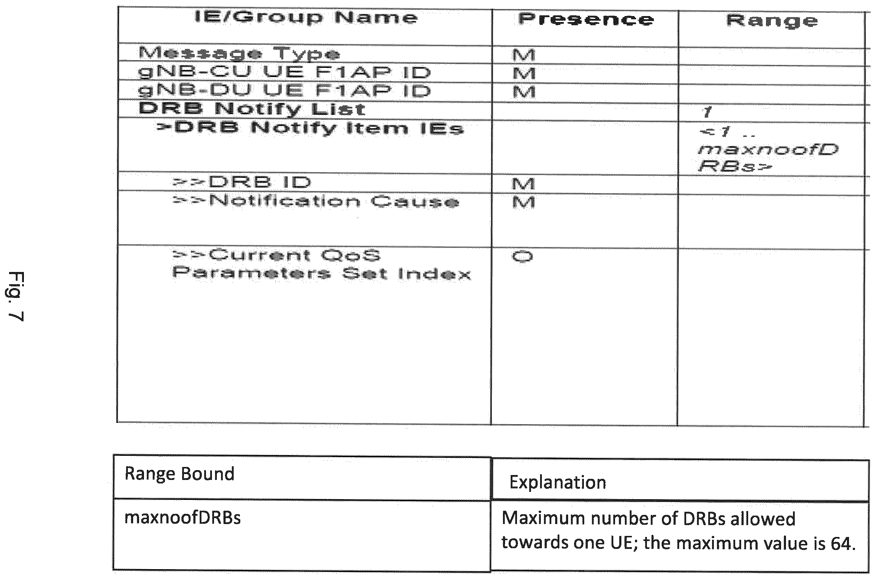

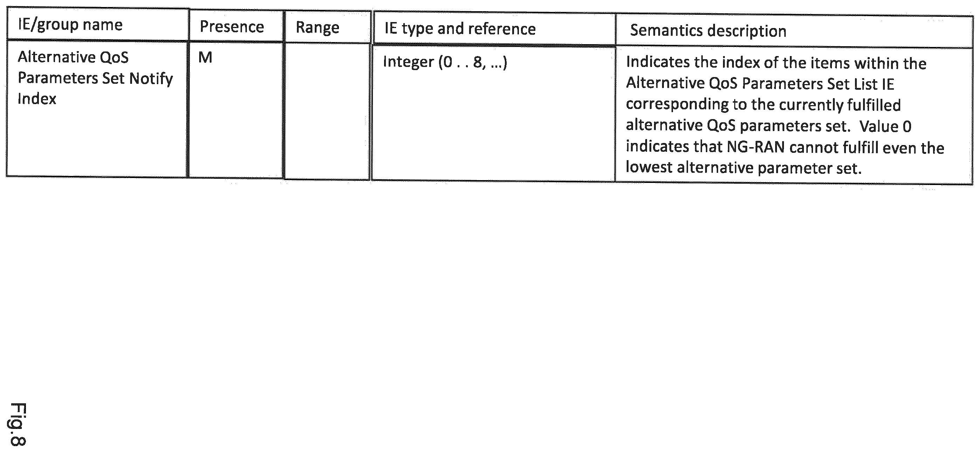

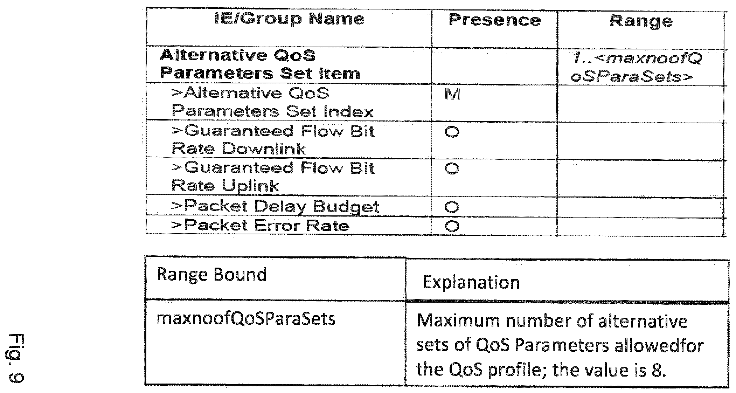

In this section, an overview of NOTIFY elementary procedure will be provided. As per 3GPP TS 38.473, the purpose of the NOTIFY procedure is to enable the gNB-DU to inform the gNB-CU that the QoS of an already established GBR DRB cannot be fulfilled any longer or that it can be fulfilled again. The procedure uses UE-associated signaling. As shown in FIG. 6, the gNB-DU 305 initiates the procedure by sending a NOTIFY 601 message to the gNB-CU 304. As shown in FIG. 7, the NOTIFY message shall contain the list of the GBR DRBs associated with notification control for which the QoS is not fulfilled anymore or for which the QoS is fulfilled again by the gNB-DU. The gNB-DU may also indicate an alternative QoS parameters set which it can currently fulfil in the *Current QoS Parameters Set Index IE*. Upon reception of the NOTIFY message, the gNB-CU may identify which are the affected PDU sessions and QoS flows. The gNB-CU may inform the 5GC that the QoS for these PDU sessions or QoS flows is not fulfilled any longer or it is fulfilled again. As shown in FIG. 8, the Alternative QoS Parameters Set Notify Index IE indicates the QoS parameters set which can be currently fulfilled. As shown in FIG. 9, the Alternative QoS Parameters Set Index IE contains alternative sets of QoS parameters which the gNB can indicate to be fulfilled when notification control is enabled and the gNB cannot fulfill the requested list of QoS parameters.

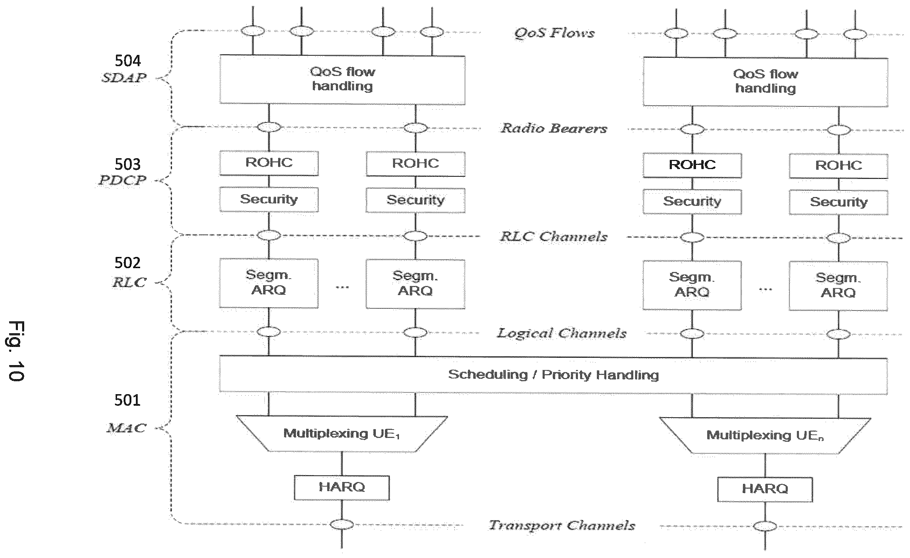

In this section, an overview Layer 2 (L2) of 5G NR will be provided in connection with FIGS. 10-12. L2 of 5G NR is split into the following sublayers (in accordance with 3GPP TS 38.300):

1) Medium Access Control (MAC) 501 in FIGS. 10-12: Logical Channels (LCs) are SAPs (Service Access Points) between the MAC and RLC layers. This layer runs a MAC scheduler to schedule radio resources across different LCs (and their associated radio bearers). For the downlink direction, the MAC layer processes and sends RLC PDUs received on LCs to the Physical layer as Transport Blocks (TBs). For the uplink direction, it receives transport blocks (TBs) from the physical layer, processes these and sends to the RLC layer using the LCs.

2) Radio Link Control (RLC) 502 in FIGS. 10-12: The RLC sublayer presents RLC channels to the Packet Data Convergence Protocol (PDCP) sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

3) Packet Data Convergence Protocol (PDCP) 503 in FIGS. 10-12: The PDCP sublayer presents Radio Bearers (RBs) to the SDAP sublayer. There are two types of Radio Bearers: Data Radio Bearers (DRBs) for data and Signaling Radio Bearers (SRBs) for control plane.

4) Service Data Adaptation Protocol (SDAP) 504 in FIGS. 10-12: The SDAP offers QoS Flows to the 5GC (5G Core). This sublayer provides mapping between a QoS flow and a DRB. It is used for QoS Flow to DRB mapping.

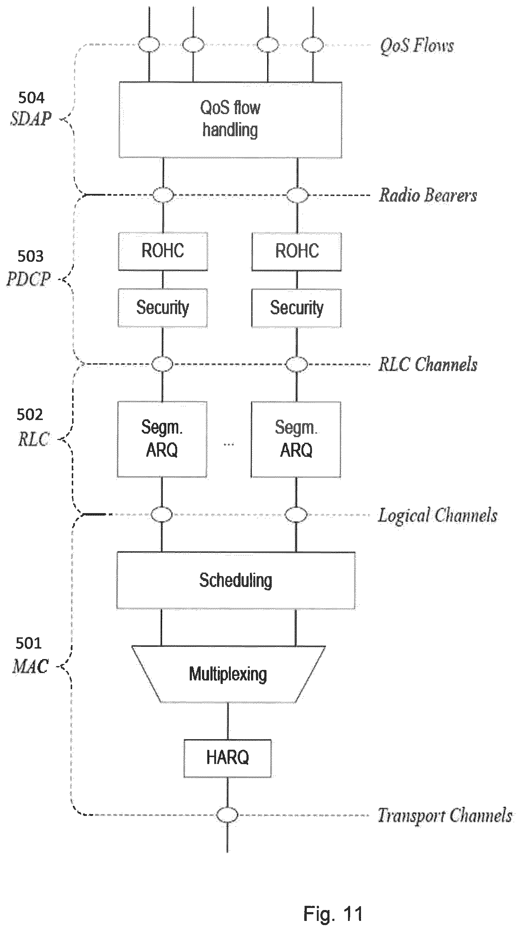

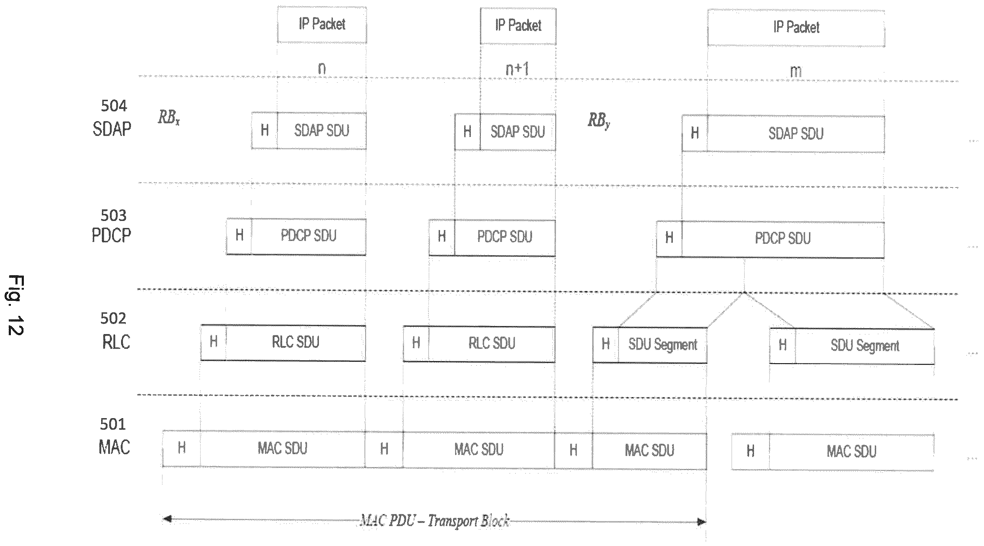

FIG. 10 is a block diagram illustrating DL L2 structure (including a scheduler or priority handling module which handles multiple UEs in a cell), in accordance with 3GPP TS 38.300. FIG. 11 is a block diagram illustrating L2 structure for a single UE, in accordance with 3GPP TS 38.300. FIG. 12 is a block diagram illustrating L2 data flow example, in accordance with 3GPP TS 38.300 (in FIG. 12, H denotes headers or sub-headers).

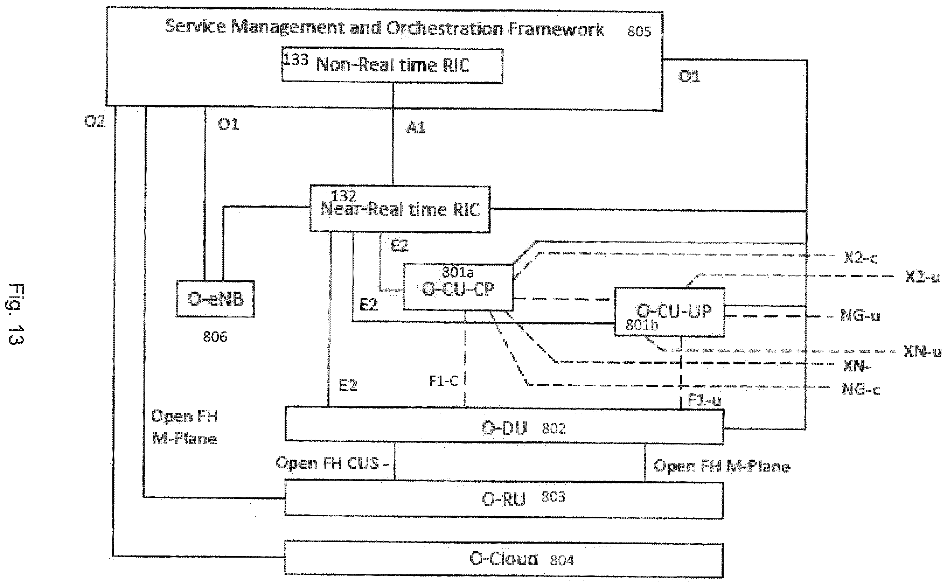

Open Radio Access Network (O-RAN) is based on disaggregated components which are connected through open and standardized interfaces based on 3GPP NG-RAN. An overview of O-RAN with disaggregated RAN CU (Centralized Unit), DU (Distributed Unit), and RU (Radio Unit), near-real-time Radio Intelligent Controller (Near-RT-RIC) and non-real-time RIC is illustrated in FIG. 13.

As shown in FIG. 13, the CU (shown split as O-CU-CP 801a and O-CU-UP 801b) and the DU (shown as O-DU 802) are connected using the F1 interface (with F1-C for control plane and F1-U for user plane traffic) over a mid-haul (MH) path. One DU can host multiple cells (e.g., one DU could host 24 cells) and each cell may support many users. For example, one cell may support 800 Radio Resource Control (RRC)-connected users and out of these 800, there may be 250 Active users (i.e., users that have data to send at a given point of time).

A cell site can comprise multiple sectors, and each sector can support multiple cells. For example, one site could comprise three sectors and each sector could support eight cells (with eight cells in each sector on different frequency bands). One CU-CP (CU-Control Plane) could support multiple DUs and thus multiple cells. For example, a CU-CP could support 1,000 cells and around 100,000 User Equipments (UEs). Each UE could support multiple Data Radio Bearers (DRB) and there could be multiple instances of CU-UP (CU-User Plane) to serve these DRBs. For example, each UE could support 4 DRBs, and 400,000 DRBs (corresponding to 100,000 UEs) may be served by five CU-UP instances (and one CU-CP instance).

The DU could be located in a private data center, or it could be located at a cell-site. The CU could also be in a private data center or even hosted on a public cloud system. The DU and CU, which are typically located at different physical locations, could be tens of kilometers apart. The CU communicates with a 5G core system, which could also be hosted in the same public cloud system (or could be hosted by a different cloud provider). A RU (Radio Unit) (shown as O-RU 803 in FIG. 13) is located at a cell-site and communicates with the DU via a front-haul (FH) interface.

The E2 nodes (CU and DU) are connected to the near-real-time RIC 132 using the E2 interface. The E2 interface is used to send data (e.g., user and/or cell KPMs) from the RAN, and deploy control actions and policies to the RAN at near-real-time RIC 132. The applications or services at the near-real-time RIC 132 that deploys the control actions and policies to the RAN are called xApps. During the E2 setup procedures, the E2 node advertises the metrics it can expose, and an xApp in the near-RT RIC can send a subscription message specifying key performance metrics which are of interest. The near-real-time RIC 132 is connected to the non-real-time RIC 133 (which is shown as part of Service Management and Orchestration (SMO) Framework 805 in FIG. 13) using the A1 interface. The applications that are hosted at non-RT-RIC are called rApps. Also shown in FIG. 13 are O-eNB 806 (which is shown as being connected to the near-real-time RIC 132 and the SMO Framework 805) and O-Cloud 804 (which is shown as being connected to the SMO Framework 805).

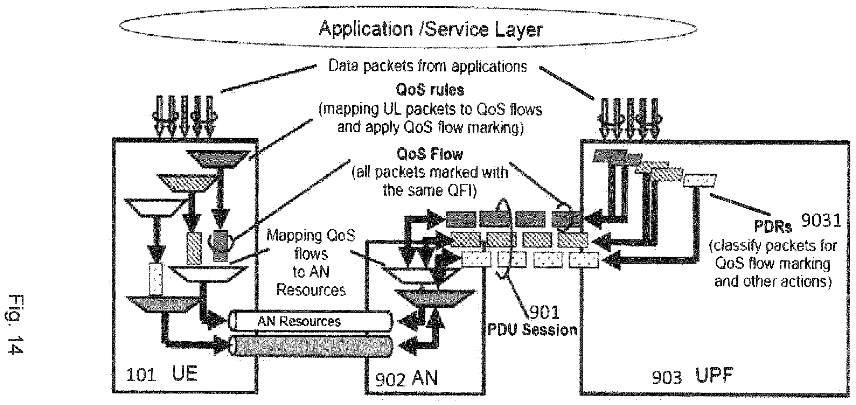

In this section, PDU sessions, DRBs, and quality of service (QoS) flows will be discussed. In 5G networks, PDU connectivity service is a service that provides exchange of PDUs between a UE and a data network identified by a Data Network Name (DNN). The PDU Connectivity service is supported via PDU sessions that are established upon request from the UE. The DNN defines the interface to a specific external data network. One or more QoS flows can be supported in a PDU session. All the packets belonging to a specific QoS flow have the same 5QI (5G QoS Identifier). A PDU session consists of the following: Data Radio Bearer which is between UE and CU in RAN; and an NG-U GTP tunnel which is between CU-UP and UPF (User Plane Function) in the core network. FIG. 14 illustrates an example PDU session (in accordance with 3GPP TS 23.501) consisting of multiple DRBs, where each DRB can consist of multiple QoS flows. In FIG. 14, three components are shown for the PDU session 901: UE 101; access network (AN) 902; and UPF 903, which includes Packet Detection Rules (PDRs) 9031.

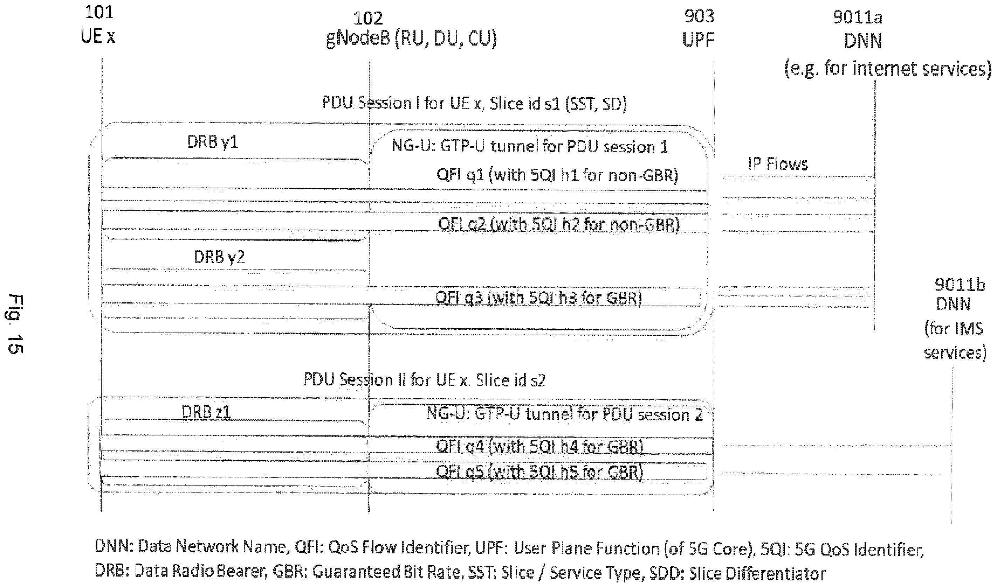

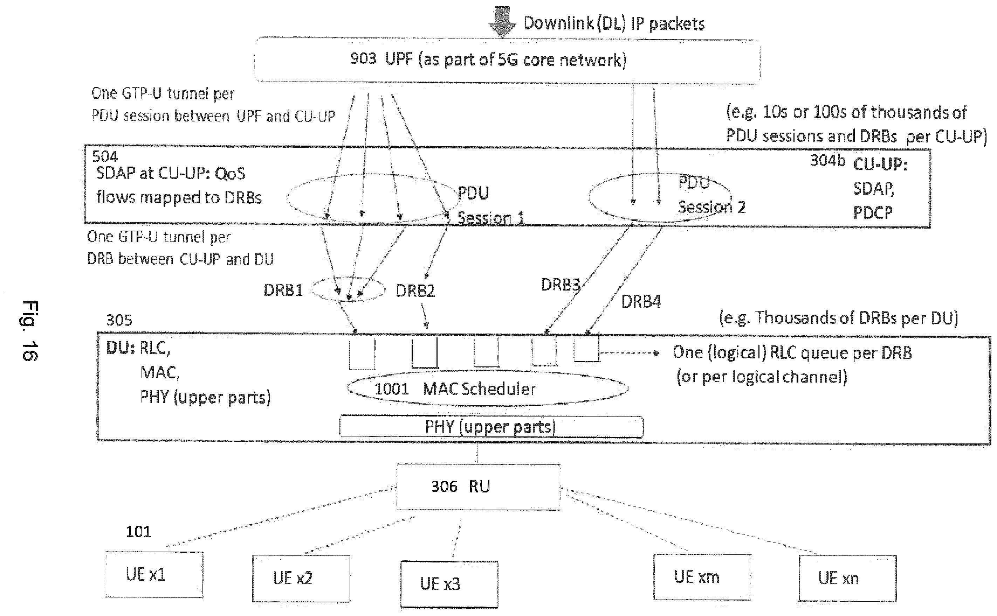

The following should be noted for 3GPP 5G network architecture, which is illustrated in FIG. 15 (in the context of multiple PDU sessions involving multiple DRBs and QoS Flow Identifiers (QFIs), which PDU sessions are implemented involving UE 101, gNodeB 102, UPF 903, and DNNs 9011a and 9011b) and FIG. 16 (in the context of Radio Resource Management (RRM) (for connecting UE 101 to the network via RU 306) with a MAC Scheduler 1001):

   1) The transport connection between the base station (i.e., CU-UP 304b) and the UPF 903 uses a single GTP-U tunnel per PDU session, as shown in FIGS. 15 and 16. The PDU session is identified using GTP-U TEID (Tunnel Endpoint Identifier).

   2) The transport connection between the DU 305 and the CU-UP 304b uses a single GTP-U tunnel per DRB (see, e.g., FIGS. 15 and 16).

   3) SDAP:

      a) The SDAP (Service Adaptation Protocol) 504 Layer receives downlink data from the UPF 903 across the NG-U interface.

      b) The SDAP 504 maps one or more QoS Flow(s) onto a specific DRB.

      c) The SDAP header is present between the UE 101 and the CU (when reflective QoS is enabled), and includes a field to identify the QoS flow within a specific PDU session.

   4) GTP-U protocol includes a field to identify the QoS flow and is present between CU-UP and UPF 903 (in the core network).

   5) One (logical) RLC queue is implemented per DRB (or per logical channel), as shown in FIG. 16.

FIG. 15 illustrates multiple PDU sessions involving multiple DRBs and QoS Flow Identifiers (QFIs).

In this section, standardized SQI to QoS characteristics mapping will be discussed. As per 3GPP TS 23.501, the one-to-one mapping of standardized SQI values to 5G QoS characteristics is specified in Table A shown below. The first column represents the SQI value. The second column lists the different resource types, i.e., as one of Non-GBR, GBR, Delay-critical GBR. The third column ("Default Priority Level") represents the priority level Priority5QI, for which the lower the value the higher the priority of the corresponding QoS flow. The fourth column represents the Packet Delay Budget (PDB), which defines an upper bound for the time that a packet may be delayed between the UE and the N6 termination point at the UPF. The fifth column represents the Packet Error Rate (PER). The sixth column represents the maximimum data burst volume for delay-critical GBR types. The seventh column represents averaging window for GBR, delay critical GBR types.

For example, as shown in Table A below, SQI value 1 represents GBR resource type with the default priority value of 20, PDB of 100 ms, PER of 0.01, and averaging window of 2000ms. Conversational voice falls under this catogery. Similarly, as shown in Table A, SQI value 7 represents non-GBR resource type with the default priority value of 70, PDB of 100ms and PER of 0.001. Voice, video (live streaming), and interactive gaming fall under this catogery.

Table A

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR (NOTE 1) | 20 | 100 ms (NOTE 11, NOTE 13) | $10^{-2}$ | N/A | 2000 ms | Conversational Voice |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 2 | | 40 | 150 ms (NOTE 11, NOTE 13) | $10^{-3}$ | N/A | 2000 ms | Conversational Video (Live Streaming) |
| 3 | | 30 | 50 ms (NOTE 11, NOTE 13) | $10^{-3}$ | N/A | 2000 ms | Real Time Gaming, V2X messages (see TS 23 287 [121]). Electricity distribution - medium voltage, Process automation monitoring |
| 4 | | 50 | 300 ms (NOTE 11, NOTE 13) | $10^{-6}$ | N/A | 2000 ms | Non-Conversational Video (Buffered Streaming) |
| 65 (NOTE 9, NOTE 12) | | 7 | 75 ms (NOTE 7, NOTE 8) | $10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10^{-2}$ | N/A | 2000 ms | Non-Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |
| 75 (NOTE 14) | | | | | | | |
| 71 | | 56 | 150 ms (NOTE 11, NOTE 13, NOTE 15) | $10^{-6}$ | N/A | 2000 ms | "Live" Uplink Streaming (e.g. TS 26.238 [76]) |
| 72 | | 56 | 300 ms (NOTE 11, NOTE 13, NOTE 15) | $10^{-4}$ | N/A. | 2000 ms | "Live" Uplink Streaming (e.g. TS 26.238 [76]) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 73 | | 56 | 300 ms (NOTE 11, NOTE 13, NOTE 15) | $10^{-8}$ | N/A | 2000 ms | "Live" Uplink Streaming (e.g. TS 26.238 [76]) |
| 74 | | 56 | 500 ms (NOTE 11, NOTE 15) | $10^{-8}$ | N/A | 2000 ms | "Live" Uplink Streaming (e.g. TS 26.238 f761) |
| 76 | | 56 | 500 ms (NOTE 11, NOTE 13, NOTE 15) | $10^{-4}$ | N/A | 2000 ms | "Live" Uplink Streaming (e.g. TS 26.238 [76]) |
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc.) |
| 7 | | 70 | 100 ms (NOTE 10, NOTE 13) | $10^{-3}$ | N/A | N/A | Voice, Video (Live Streaming) Interactive Gaming |

In this section, Radio Resource Management (RRM), e.g., per-DRB RRM, will be discussed. FIG. 16 is a block diagram illustrating RRM with a MAC Scheduler. L2 methods (such as MAC scheduler) play a critical role in allocating radio resources to different UEs in a cellular network. The scheduling priority of a logical channel ($P_{LC}$) is determined as part of MAC scheduler using one of the following:

$$P_{LC} = W_{5QI}*P_{5QI} + W_{GBR}*P_{GBR} + W_{PDB}*P_{PDB} + W_{PF}*P_{PF},$$

or

$$P_{LC} = (W_{5QI}*P_{5QI} + W_{PF}*P_{PF}) * \text{maximum} (W_{GBR}*P_{GBR}, W_{PDB}*P_{PDB})$$

Once one of the above methods is used to compute scheduling priority of a logical channel corresponding to a UE in a cell, the same method is used for all other UEs.

In the above expressions, the parameters are defined as follows:

a) $P_{5QI}$ is the priority metric corresponding to the QoS class (5QI) of the logical channel. Incoming traffic from a DRB is mapped to Logical Channel (LC) at RLC level. $P_{5QI}$ is the default SQI priority value, $Priority_{5QI}$, of a QoS flow that is mapped to the current LC. The lower the value of $Priority_{5QI}$ the higher the priority of the corresponding QoS flow. For example, Voice over New Radio (VoNR) (with 5QI of 1) will have a much higher $P_{5QI}$ compared to web browsing (with SQI of 9).

b) $P_{GBR}$ is the priority metric corresponding to the target bit rate of the corresponding logical channel. The GBR metric $P_{GBR}$ represents the fraction of data that must be delivered to the UE within the time left in the current averaging window $T_{avg\_win}$ (as per SQI table, default is 2000 msec.) to meet the UE's GBR requirement. $P_{GBR}$ is calculated as follows:

$$P_{GBR} = remData/targetData$$

where

$targetData$ is the total data bits to be served in each averaging window $T_{avg\_win}$ in order to meet the GFBR of the given QoS flow;

$remData$ is the amount of data bits remaining to be served within the time left in the current averaging window;

$Priority_{GBR}$ is reset to 1 at the start of each averaging window $T_{avg\_win}$, and should go down to 0 towards the end of this window if the GBR criterion is met; and

$$Priority_{GBR} = 0 \text{ for non-GBR flows}$$

c) $P_{PDB}$ is the priority metric corresponding to the packet delay budget at DU for the corresponding logical channel. $P_{PDB} = 1$ if $PDB^{DU} <= QDelay_{RLC}$ and $P_{PDB} = 1 / (PDB^{DU} - QDelay_{RLC})$ if $PDB^{DU} > QDelay_{RLC}$ where both $PDB^{DU}$ (Packet Delay Budget at DU) and RLC Queuing delay, $QDelay_{RLC}$, are measured in terms of slots. $QDelay_{RLC} = (t - T_{RLC})$ is the delay of the oldest RLC packet in the QoS flow that has not been scheduled yet, and it is calculated as the difference in time between the SDU insertion in RLC queue to current time where $t :=$ current time instant, $T_{RLC} :=$ time instant when oldest SDU was inserted in RLC.

d) $P_{PF}$ is the priority metric corresponding to proportional fair metric of the UE. $P_{PF}$ is the classical PF Metric, calculated on a per UE basis as $P_{PF} = r / R_{avg}$
where

r: UE spectral efficiency calculated based on one RB & it's last reported CQI; and

$R_{avg} = a.R_{avg} + (1-a).b$ , UE's average throughput, where b>=0 is #bits scheduled in current TTI and $0 < a <= 1$ is the IIR filter coefficient

e) In addition, the following weights are defined: $W_{5QI}$ is the weight of $P_{5QI}$; f) $W_{GBR}$ is the weight of $P_{GBR}$; g) $W_{PDB}$ is the weight of $P_{PDB}$; and h) $W_{PF}$ is the weight of $P_{PF}$. Each of the above weights is set to a value between 0 and 1.

In this section, a general overview of reinforcement learning (RL) will be provided. Reinforcement Learning is a feedback-based machine learning technique in which an agent learns to behave in an environment by performing actions and seeing the results of the actions. For each good action, the agent gets a positive feedback, and for each bad action, the agent gets a negative feedback or penalty. In reinforcement learning, the agent learns automatically using feedbacks, without the use of any labelled data. Since there is no labelled data, the agent is bound to learn by its experience only. The primary goal of an agent in reinforcement learning is to improve the performance by getting the maximum overall reward (or minimum overall cost).

Some of the terms used in connection with reinforcement learning technique are listed below:

∘ Agent(): An entity that interacts with the environment and acts upon it.

◦ Environment(): A situation in which an agent is present or surrounded by. In RL, a stochastic environment is assumed, which means it is random in nature.

◦ Action(): Actions are the moves taken by an agent within the environment.

◦ State(): State is a situation returned by the environment after each action taken by the agent.

◦ Cost() or Reward(): A feedback returned to the agent from the environment to evaluate the action of the agent. In the present disclosure, the terms "reward" and "cost" are used interchangeably. For example, negative cost is equivalent to positive reward, and positive cost is equivalent to negative reward (or penalty). Reward is a positive term, whereas cost (or penalty) is a negative term. So negative of a reward can be called a cost, and vice versa.

◦ Policy(): Policy is a strategy applied by the agent for the next action based on the current state.

◦ Value(): It is an expected long-term cost with a discount factor.

◦ Q-value(): It is similar to value, but it takes one additional parameter as a current action 'a'.

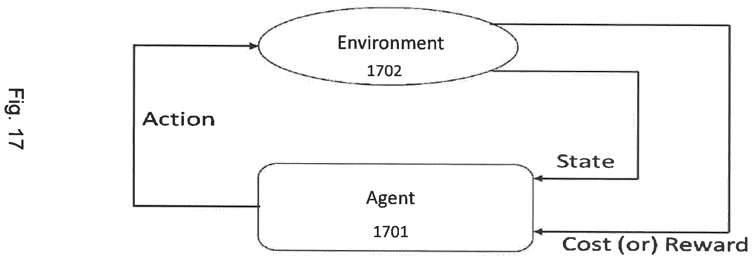

In this section, Markov Decision Process (MDP), will be discussed. MDP is used to formalize the reinforcement learning (RL) problems. If the environment is completely observable, then its dynamics can be modelled as a Markov Process. In MDP, which is illustrated in FIG. 17, the agent 1701 constantly interacts with the environment 1702 and performs actions; at each action, the environment responds and generates a new state. MDP is used to describe the environment for the RL, and almost all the RL problems can be formalized using MDP. MDP contains a tuple of four elements, as follows: States, Actions, Costs/Rewards, and Transition Probabilities. Provided below is a simple set notation to represent each of the elements in an MDP:

◦ S: A set of finite States S

◦ A: A set of finite Actions A

◦ C(s, a): Immediate cost (or expected immediate cost) incurred after transitioning from state 's' to state 's", due to action 'a'.

◦ P: represents the Transition probability matrix corresponds to state space S and action space A.

◦ P(s'|s, a): Transition Probability of landing in state 's" when action 'a' is taken at state 's'.

A finite MDP is when there are finite states, finite costs, and finite actions. Only the finite MDP is considered in RL.
MDP uses Markov property, i.e., the current state transition does not depend on any past action or state. Hence, MDP is an RL problem that satisfies the Markov property. Markov Process is a memoryless process with a sequence of random states that uses the Markov Property. Markov process is also known as Markov chain, which is a tuple (S, P) on state S and transition probability matrix P. These two components (S and P) can define the dynamics of the system.
Reinforcement learning uses MDPs where the probabilities or costs are unknown. Reinforcement learning can solve MDPs without explicit specification of the transition probabilities; the values of the transition probabilities are needed in value and policy iteration. Reinforcement learning can also be combined with function approximation to address problems with a very large number of states.
In this section, some of the example approaches used in RL will be discussed, which example approaches include: Value-based approach (Value iteration methods); Q-learning; Deep Q Neural Network (DQN); and Policy-based approach (Policy iteration methods).
The value-based approach is about finding the optimal value function, which is the maximum value at a state under any policy. Therefore, the agent expects the long-term return at any state(s) under policy $\pi$. V(s), which is specified below, indicates an example value-based approach. Q-learning, which is discussed later and is a variant of the value-based approach, takes one additional parameter as a current action 'a'. The below system of equations for the state space are called Bellman equations or optimality equations, which characterize values and optimal policies in infinite-horizon models:

$$V(s) = \min_{a}\{C(s,a) + \gamma \sum_{s'} P(s'|s,a)V(s')\}$$

where,

V(s): Value at state s;

C(s,a): Immediate cost at state s, action a;

y:discount factor;

P(s'ls,a): transition probability of landing in state s' when action a is taken at state s; and

V(s'): Value at state s'.

Q-learning involves learning the value function Q (s, a), which characterizes how good it is to take an action "a" at a particular state "s". The main objective of Q-learning is to learn the policy which can inform the agent what actions should be taken for minimizing the overall cost. The goal of the agent in Q-learning is to optimize the value of Q. The value of Q-learning can be derived from the Bellman equation. Q represents the quality of the action at each state, so instead of using a value at each state, we will use a pair of state and action, i.e., Q(s, a). Q-value specifies which action is more beneficial or lucrative than others, and according to the best Q-value, the agent takes his next move. The Bellman equation can be used for deriving the Q-value.

After performing an action "a", the agent will incur a cost C(s, a), and the agent will end up at a certain state, so the Q-value equation will be:

$$Q(s,a) = C(s,a) + \gamma \sum_{s'} (P(s'|s,a) \min [Q(s',a)])$$

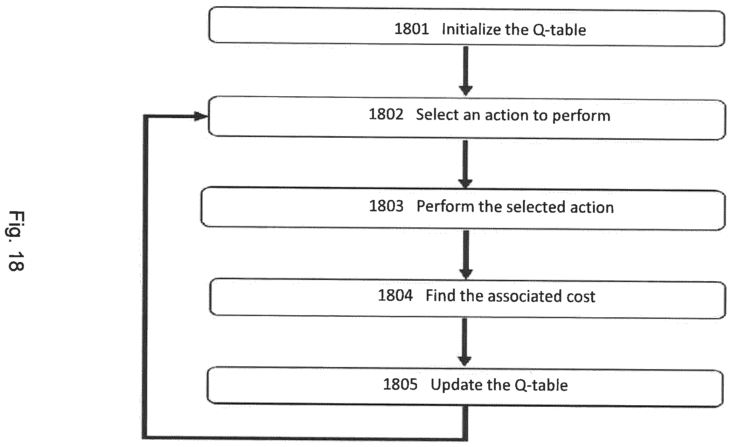

The flowchart shown in FIG. 18 illustrates the workings of Q-learning. In block 1801, the Q-table is initialized. In block 1802, an action to perform is selected. In block 1803, the selected action is performed. In block 1804, the associated cost for the action is found. In block 1805, the Q-table is updated.

Deep Q Neural Network (DQN) is a Q-learning using Neural networks. For a big state space environment, it will be a challenging and complex task to define and update a Q-table. To solve such an issue, we can use a DQN algorithm. In this approach, instead of defining a Q-table, neural network approximates the Q-values for each action and state.

Policy-based approach is to find the optimal policy for the minimum future costs without using the value function. It converges for finite state, action set. It has two steps, policy evaluation and policy improvement. In policy improvement, If the policy is same at two consecutive epochs, then it is the optimal policy.

The policy-based approach involves mainly two types of policies: 1) Deterministic policy, whereby the same action is produced by the policy for any given state; and 2) Stochastic policy, whereby for each state there is a distribution over set of actions possible at that state.

In this section, the application of artificial intelligence (AI) and/or machine learning (ML) in RAN will be discussed. 3GPP TR 37.817 focuses on the analysis of data needed at the Model Training function and Model Inference function from Data Collection. Where AI/ML functionality resides within the current RAN architecture depends on the deployment and the specific use cases. The Model Training and Model Inference functions should be able to request, if needed, specific information to be used to train or execute the AI/MI, algorithm and to avoid reception of unnecessary information. The nature of such information depends on the use case and on the AI/ML algorithm. The Model Inference function should signal the outputs of the model only to nodes that have explicitly requested them (e.g., via subscription), or nodes that take actions based on the output from Model Inference. An AI/ML model used in a Model Inference function has to be initially trained, validated and tested by the Model Training function before deployment. In this context, NG-RAN stand-alone (SA) is prioritized, while EN-DC and MR-DC are less prioritized, but not precluded from 3GPP Release 18.

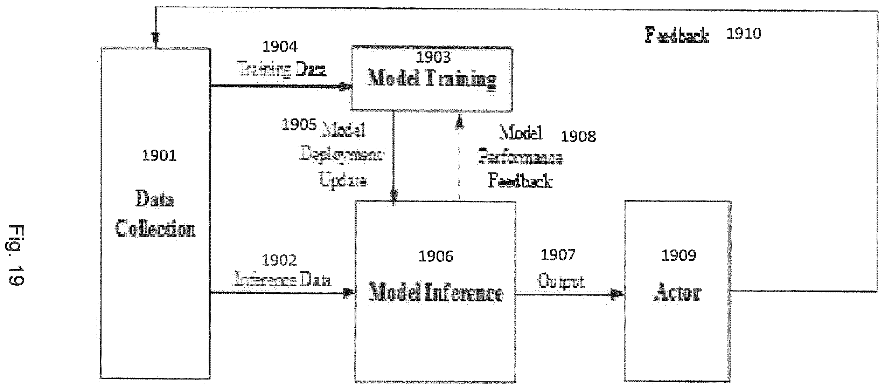

In this section, the functional framework for RAN intelligence, which is illustrated in FIG. 19, and the associated common terminologies will be discussed.

i) Data Collection (shown as block 1901 in FIG. 19) is a function that provides input data to Model training and Model inference functions. AI/MI, algorithm specific data preparation (e.g., data pre-processing and cleaning, formatting, and transformation) is not carried out in the Data Collection function module 1901. Examples of input data may include measurements from UEs or different network entities, feedback from Actor, and output from an AI/MI, model. Training Data: Data needed as input for the AI/MI, Model Training function.

ii) Inference Data (referenced by 1902 in FIG. 19) refer to data needed as input for the AI/ML Model Inference function.

iii) Model Training (shown as block 1903 in FIG. 19) is a function that performs the AI/ML model training, validation, and testing which can generate model performance metrics as part of the model testing procedure. The Model Training function is also responsible for data preparation (e.g., data pre-processing and cleaning, formatting, and transformation) based on Training Data (referenced by 1904 in FIG. 19) delivered by a Data Collection function, if required.

iv) Model Deployment/Update function (referenced by 1905 in FIG. 19) is used to initially deploy a trained, validated, and tested AI/ML model to the Model Inference function or to deliver an updated model to the Model Inference function.

v) Model Inference (shown as block 1906 in FIG. 19) is a function that provides AI/ML model inference output (e.g., predictions or decisions). Model Inference function can provide Model Performance Feedback to Model Training function block 1903 when applicable. The Model Inference function is also responsible for data preparation (e.g., data pre-processing and cleaning, formatting, and transformation) based on Inference Data delivered by a Data Collection function, if required.

vi) Output (referenced by 1907 in FIG. 19) refers to the inference output of the AI/MI, model produced by a Model Inference function.

vii) Model Performance Feedback (referenced by 1908 in FIG. 19) can be used for monitoring the performance of the AI/ML model, when available.

viii) Actor (shown by block 1909 in FIG. 19) is a function that receives the output from the Model Inference function block 1906 and triggers or performs corresponding actions. The Actor may trigger actions directed to other entities or to itself.

ix) Feedback (referenced by 1910 in FIG. 19) is information that may be needed (and/or can be used) to derive training data, inference data or to monitor the performance of the AI/ML Model and its impact to the network through updating of KPIs and performance counters.

Given the increasing demand in mobile data traffic and the heterogeneity of the Quality of Service with stringent requirements such as throughput, latency of various applications is an important challenge for the existing 5G networks. To solve this issue, a base station requires an intelligent Radio Resource Management (RRM) which can cope with the existing and emerging QoS challenges in the near future. Conventional RRM methods (e.g., as previously described above) include those which are hosted at DU and are very computation intensive.
Accordingly, there is a need for an improved system and method for optimizing RRM methods in O-RAN networks.

SUMMARY

Accordingly, what is desired is an improved system and method for optimizing RRM methods, e.g., using machine learning approaches, in O-RAN networks.
According to a first example embodiment of the system and method according to the present disclosure, the RRM analytics module can be hosted at one of the following components, for example: 1) RIC (e.g., Near-RT RIC) server; 2) gNodeB (e.g., at CU-UP or CU-CP); 3) 5G Network Data Analytics Function (NWDAF) server; or 4) Operations, Administration Maintenance (OAM) server. According to the first example embodiment, various performance measurements are communicated from gNodeB-DU to the RRM analytics module. These performance measurements include the following for each UE: Buffer Occupancy (BO) at SQI level; Channel State Information (CSI); UE Throughput; Packet delay at SQI level; Packet error rate (PER) at SQI level; and PF metric. These performance measurements are analyzed at the RRM analytics module for each UE.
According to a first variant of the first example system and method, the RRM analytics module is located at Near-RT RIC. In this first variant, the following steps are implemented:

Step A: Near-RT RIC configures an RIC Subscription in the DU with information used to configure a policy that is to be performed by DU with each occurrence of trigger event. For each UE, the Near-RT RIC subscribes to the following performance measurements from the DU: Buffer Occupancy (BO) at SQI level; UE Channel State Information (CSI); UE Throughput; Packet delay at SQI level; Packet error rate (PER) at SQI level; and PF metric.

Step B: During normal functioning of the DU, a trigger event is detected.

Step C: DU modifies ongoing call process according to information contained in the policy.

Step D: Associated procedure instance continues in the DU, and the DU sends the performance measurements to Near-RT RIC in RIC indication message.

Step E: Based on the received performance measurement, the Near-RT RIC performs data analysis and decision making to achieve optimal resource allocation.

According to a second variant of the first example system and method, the RRM analytics module is located at the CU-UP. In this second variant, the following steps are implemented:

Step (I): The DU communicates the following performance measurements to CU-CP: Buffer Occupancy (BO) at SQI level; UE Channel State Information (CSI); UE Throughput; Packet delay at SQI level; Packet error rate (PER) at SQI level; and PF metric. The present disclosure defines a new message called NOTIFY PERFORMANCE MEASURES, which shall contain the list of active UEs with their corresponding Performance Measurement Index.

Step (II): CU-CP communicates the above performance measurements received from DU to CU-UP. E1 interface between CU-CP and CU-UP is enhanced for this purpose, by implementing NOTIFY PERFORMANCE MEASURES TO CU-UP message, which is sent by the CU-CP to inform the performance measurements received from the DU to CU-UP using the Performance Measurement Index.

Step (III): RRM analytics module at CU-UP analyzes the performance measures received from DU (via CU-CP, i.e., DU 4 CU-CP 4 CU-UP, with enhanced F1-C for DU $\rightarrow$ CU-CP and enhanced E1 for CU-CP $\rightarrow$ CU-UP), and derives a near-optimal policy (lookup table) using one of the techniques discussed in the section discussing RRM related decisions using reinforcement learning (as part of Method 2).

Step (IV): CU-UP communicates the policy (lookup table) to CU-CP. E1 interface is enhanced for this purpose, by implementing ML LOOKUP TABLE TO CU-CP message, which is used for communicating the POLICY IE to the CU-CP.

Step (V): CU-CP forwards the lookup table to DU. F1-C interface is enhanced for this purpose, by implementing ML LOOKUP TABLE message, which used for communicating the POLICY IE to the DU. DU maintains this policy for scheduling the UEs until a new policy is downloaded from CU-UP via CU-CP.

According to an example embodiment of the method according to the present disclosure, the mapping of the RRM-related decision making process to a reinforcement learning problem by formalizing it using an MDP, which involves four elements: States; Actions; Costs/Rewards; and Transition Probabilities.

According to an example embodiment of the method according to the present disclosure, at time t, the immediate cost for $UE_i$ when this $UE_i$ is in state "s" with action "a" is represented as $C(s_i(t)=s, a_i(t)=a) = C'(s(t), a(t))$. The cost can be written as a function of costs associated with each state variable, as shown below in the expanded cost equation. The overall cost is a weighted sum of the costs associated with the BO, GBR, PDB, PER, and PF state variables and cell level cost. Here, $C_{CL}(\bar{s}(t), \bar{a}(t))$ represents the cell level cost associated with all the active UEs in the cell. The vector notation $\bar{s}(t)$, $\bar{a}(t)$ represents the set of states and actions of all the active UEs.

$$C^i\big(s(t), a(t)\big) = w_1 * C^i_{BO}\big(s(t), a(t)\big) + w_2 * C^i_{PDB}\big(s(t), a(t)\big) + w_3 * C^i_{GBR}\big(s(t), a(t)\big) + w_4 * C^i_{PER}\big(s(t), a(t)\big) + w_5 * C^i_{PF}\big(s(t), a(t)\big) + w_6 * C_{CL}\big(\bar{s}(t), \bar{a}(t)\big)$$

According to an example embodiment, a method for optimizing RRM methods includes a Value iteration policy (Policy 1). For the unknown transition probability matrix, we initialize the matrix with zero and update it in the following manner. At state "*s*", after taking action "a", the system lands in state *s'*, then we update P(s' |s, a) = 1. Later, at the same state "s", taking the same action "a", the system lands in $s$", then we update P(s'|s, a) = P(s" |s, a) = 0.5. We update the transition probabilities based on i) the different states in which the system landed and ii) the number of times the system landed in each state.

According to an example embodiment, a method for optimizing RRM methods includes a Policy 2. After initial learning of transition probabilities as mentioned in Policy 1, we can run the RL with exploration and exploitation strategy. In the exploration stage, we choose the action to schedule the UE or not to schedule the UE uniformly at random. In the exploitation stage, we choose the action that incurred the minimum cost until now (i.e., during the training phase). Here, delta is a parameter controlling the amount of exploration vs. exploitation.

In the present disclosure, system and/or network components (e.g., RRM analytics module, RIC, and RAN nodes (including CU-CP, CU-UP, and DU) can be implemented as i) software executed on processor(s) and/or servers, and/or ii) dedicated hardware modules comprising processor(s) executing software, to implement the respective functionalities of the system and/or network components.

For this application, the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

DESCRIPTION OF THE DRAWINGS

FIG. 1 is a block diagram illustrating the user plane stack of 5G NR.

FIG. 2 is a block diagram illustrating the user plane protocol stacks for a PDU session of 5G NR.

FIG. 3 is a block diagram illustrating the control plane stack of 5G NR.

FIG. 4 is a block diagram illustrating NG-RAN architecture.

FIG. 5 is a block diagram illustrating separation of CU-CP and CU-UP in NG-RAN architecture.

FIG. 6 illustrates the gNB-DU initiating the NOTIFY procedure by sending a NOTIFY message.

FIG. 7 illustrates the NOTIFY message, as per 3GPP 38.473.

FIG. 8 illustrates the Alternative QoS Parameters Set Notify Index IE.

FIG. 9 illustrates the Alternative QoS Parameters Set List IE.

FIG. 10 is a block diagram illustrating DL L2 structure.

FIG. 11 is a block diagram illustrating UL L2 structure.

FIG. 12 is a block diagram illustrating L2 data flow example.

FIG. 13 illustrates an overview of O-RAN architecture.

FIG. 14 illustrates an example PDU session consisting of multiple DRBs.

FIG. 15 illustrates an example of PDU sessions consisting of multiple DRBs and QFIs.

FIG. 16 is a block diagram illustrating RRM with a MAC Scheduler.

FIG. 17 illustrates the MDP.

FIG. 18 is a flowchart of Q-learning.

FIG. 19 is a block diagram illustrating the functional framework for RAN intelligence.

FIG. 20 is a signal flow diagram illustrating a Near-RT RIC subscribing to various performance measurements from DU (E2 node).

FIG. 21 is a signal flow diagram illustrating RRM analytics at a Near-RT RIC.

FIG. 22a is a signal flow diagram of NOTIFY PERFORMANCE MEASURES message being sent.

FIG. 22b illustrates the NOTIFY PERFORMANCE MEASURES message format.

FIG. 23 illustrates a signal flow diagram of NOTIFY PERFORMANCE MEASURES TO CU-UP message being sent.

FIG. 24 illustrates a signal flow diagram of ML LOOK-UP TABLE TO CU-CP message being sent.

FIG. 25 illustrates a signal flow diagram of ML LOOK-UP TABLE message being sent.

FIG. 26 is a block diagram illustrating RRM analytics at CU-UP.

DETAILED DESCRIPTION

According to a first example embodiment of the system and method according to the present disclosure, the RRM analytics module can be hosted at one of the following components, for example: 1) RIC (e.g., Near-RT RIC) server; 2) gNodeB (e.g., at CU-UP or CU-CP); 3) 5G Network Data Analytics Function (NWDAF) server; or 4) Operations, Administration Maintenance (OAM) server. According to the first example embodiment, various performance measurements are communicated from gNodeB-DU to the RRM analytics module. These performance measurements include the following for each UE: Buffer Occupancy (BO) at SQI level; Channel State Information (CSI); UE Throughput; Packet delay at SQI level; Packet error rate (PER) at SQI level; and PF metric. These performance measurements are analyzed at the RRM analytics module for each UE.

The RRM analytics module forms an MDP. Forming an MDP requires states, actions, transition probabilities and costs. Each performance measurement takes a certain range of values. We quantize (or classify) the range of values taken by each performance measurement to $n$ levels, where $n$ is a finite value. Here, we consider each performance measurement as a state variable of an MDP. There are finite state variables, and each state variable takes finite values, so the state space is finite. The DU and RRM analytics module (e.g., hosted at CU-UP, CU-CP, or Near-RT RIC) agree upon a common state space table, RRM Parameters Set List, as shown in Table 2 below. The RRM Parameters Set List IE contains the sets of performance measurements gNB-DU can indicate to the RRM Analytics module. We index the entries in the table using Performance Measurement Index, shown in Table 1 below, for easy communication across different interfaces. The Performance Measurement Index IE indicates the index of the items within the RRM Parameter Set List corresponding to the current state of the UE after taking an action. The actions at each state for any UE are binary, i.e., {schedule (1), not schedule (0)}. For any active UE, if the DU wants to communicate its current performance measurements to RRM analytics module, first the DU chooses one entry from the RRM Parameters Set List based on the state it landed upon (current state after the action) based on the action. There will be a cost associated with each action. For the case where the transition probabilities are unknown, the transition probabilities are obtained during the training phase and can be used at later stage, as explained below in the section discussing RRM related decisions using reinforcement learning (as part of Method 2).

TABLE 1

| IE/group name | Presence | Range | IE type and reference | Semantics description |
|---|---|---|---|---|
| Performance Measurement Index | M | | Integer takes in {1.. \|S\|} | Indicates the index of the items within the RRM Parameters Set List IE corresponding to the currently state of the active UE after taking and action. |

TABLE 2

| IE\|Group Name | Presence | Range |
|---|---|---|
| RRM Parameter Set Item | | 1 to \| S \| |
| Performance Measurement Index | M | |
| Buffer Occupancy | O | |
| Channel State Information | O | |
| LIE Throughput | O | |
| Packet delay | O | |
| Packet error rate | O | |
| PF metric | O | |
| \| S \| is the state space cardinality | | |

In the section discussing RRM related decisions using reinforcement learning (as part of Method 2), various policies that will be computed at the RRM analytics module are discussed. In this context, POLICY IE is implemented as a lookup table with (state, action) pair, i.e., for each state assigning a near-optimal action to achieve optimal allocation of radio resources. The lookup table (i.e., POLICY) will be sent to DU from the RRM analytics module based on certain triggers (and/or periodically). In this context, a Binary Action Array (which is a bit string of zeroes and ones) is included as part of the POLICY (as shown in Table 3 below) and sent with size equal to the length of Performance Measurement Index to represent the near optimal action for each state. This Binary Action Array will be used at the DU for scheduling until the next policy is received from the RRM analytics module. This will reduce the computational burden at the DU for allocating radio resources, since no computation at the DU is required for resource allocation. It is a lightweight approach from the DU point of view.

TABLE 3

| IE/Group Name | Presence | Range | IE type and reference |
|---|---|---|---|
| RRM Parameter Set Item | O | | INTEGER (1 to \| S \|) |
| Performance Measurement Index | O | | ENUMERATED (Schedule (0), Not to Schedule (1)) |
| Buffer Occupancy | M | | BITSTRING (SIZE \| S \|) |

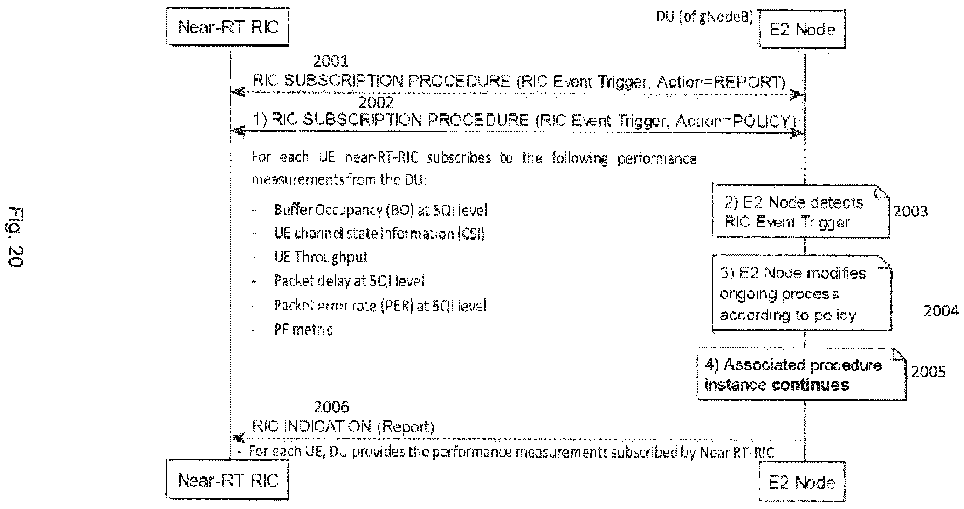

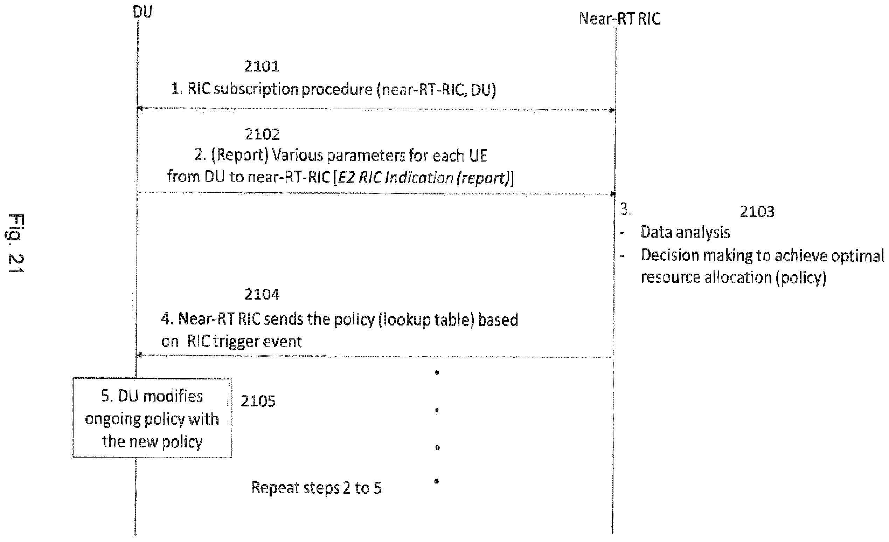

Method 1A (Machine Learning based RRM analytics module at near-RT-RIC): In the below section, a first variant of the first example system and method is presented, in which first variant the RRM analytics module is located at Near-RT RIC. In this first variant, the following steps are implemented (as shown in FIG. 20, which illustrates the Near-RT RIC subscribing to various performance measurements from the DU for each UE, and as shown in FIG. 21, which illustrates the overall RRM analytics at the Near-RT RIC):

Step A: Near-RT RIC configures an RIC Subscription in the DU (which is also shown as an E2 Node) with information used to configure a policy that is to be performed by DU with each occurrence of trigger event. This configuration of RIC Subscription Procedure is illustrated by the process arrows 2001 and 2002 in FIG. 20, as well as the process arrow 2101 in FIG. 21. E2SM-KPM service supports E2 Node measurements for multiple UEs. For each UE, the Near-RT RIC subscribes to the following performance measurements from the DU: Buffer Occupancy (BO) at SQI level; UE Channel State Information (CSI); UE Throughput; Packet delay at SQI level; Packet error rate (PER) at SQI level; and PF metric.

Step B: During normal functioning of the DU, a trigger event is detected (e.g., RIC event trigger, as referenced by block 2003 in FIG. 20).

Step C: DU modifies ongoing call process according to information contained in the policy (as referenced by block 2004 in FIG. 20).

Step D: Associated procedure instance continues in the DU (as referenced by block 2005 in FIG. 20). DU sends these performance measurements to Near-RT RIC in RIC indication message (as referenced by the process arrow 2006 in FIG. 20, and as referenced by the process arrow 2102 in FIG. 21).

Step E: Based on the received performance measurement, the Near-RT RIC performs data analysis and decision making to achieve optimal resource allocation (as referenced by 2103 in FIG. 21).

It should be noted that the Near-RT RIC sends the policy (i.e., lookup table) based on RIC event trigger (e.g., specified periodicity), as shown by the process arrow 2104 in FIG. 21. DU node detects the RIC event trigger and modifies the ongoing process according to the policy, as shown by the block 2105 in FIG. 21. The DU runs this policy until a new policy is received at the DU.

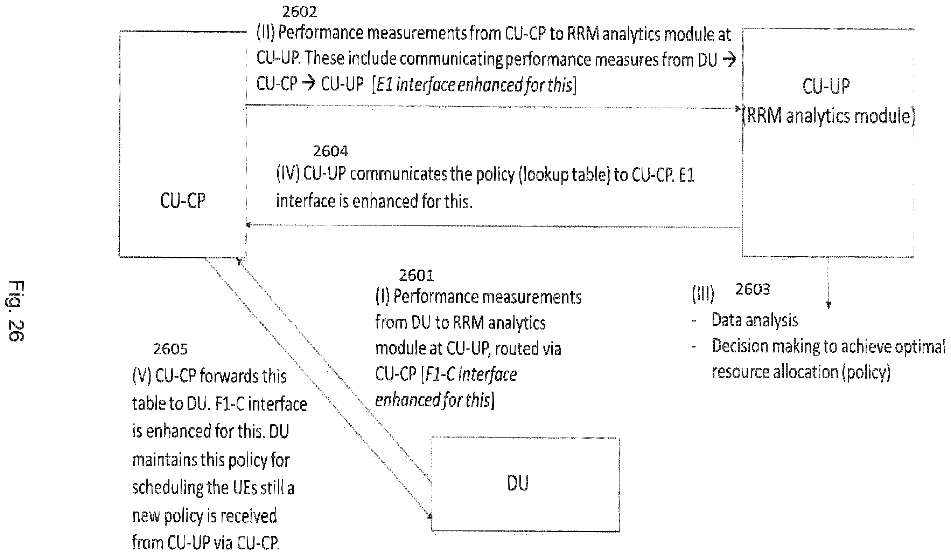

Method 1B (Reinforcement learning based RRM analytics module at CU-UP): In the below section, a second variant of the first example system and method is presented, in which second variant the RRM analytics module is located at the CU-UP. In this second variant, the following steps are implemented (as shown in FIGS. 20-26, with FIG. 26 illustrating the overall RRM analytics steps (I) -(V) described below):

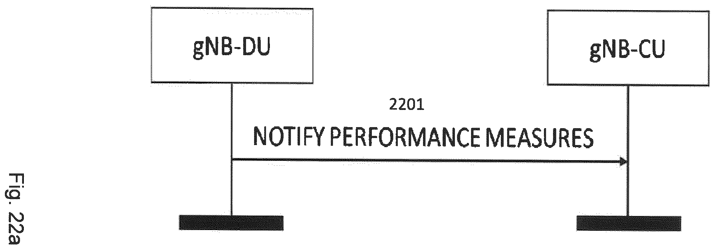

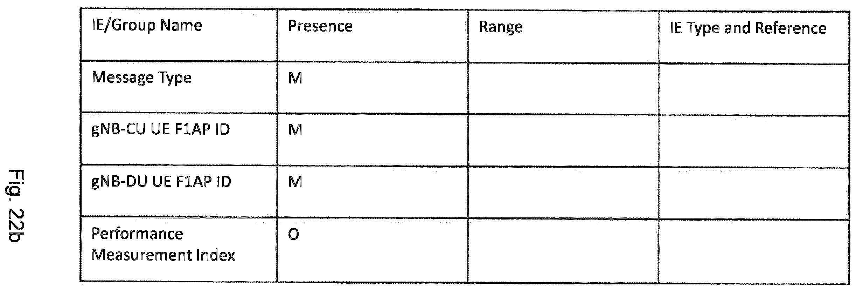

Step (I): The DU communicates the following performance measurements to CU-CP: Buffer Occupancy (BO) at SQI level; UE Channel State Information (CSI); UE Throughput; Packet delay at SQI level; Packet error rate (PER) at SQI level; and PF metric. At the DU, communication of the performance measurements can be done periodically or based on specified events. F1-C interface between DU and CU-CP is enhanced for this purpose. The existing NOTIFY message between DU and CU-CP (as per 3GPP TS 38.473) has at least two shortcomings: i) it is only for GBR DRBs; and ii) the Alternative QoS Parameter Sets mentioned in connection with FIG. 9 are limited to a maximum of eight. Therefore, the present disclosure defines a new message called NOTIFY PERFORMANCE MEASURES, as shown and referenced by 2201 (sent from gNB-DU to gNB-CU) in FIG. 22a. FIG. 22b illustrates the NOTIFY PERFORMANCE MEASURES message format, as per the current requirement. The NOTIFY PERFORMANCE MEASURES shall contain the list of active UEs with their corresponding Performance Measurement Index as in Table 1 based on the current performance measurements at DU. The Performance Measurement Index is the state in which UE settles after taking the action as per the existing policy at DU. Step (I) is referenced by 2601 in FIG. 26.

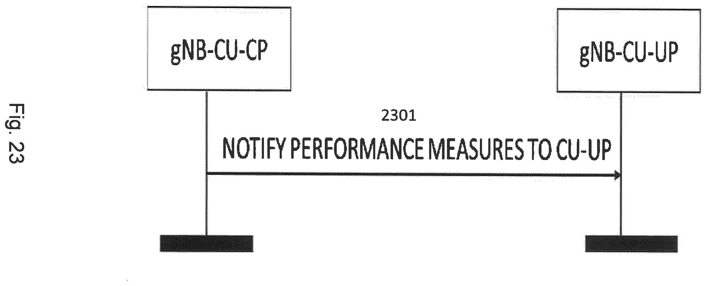

Step (II): CU-CP communicates the above performance measurements received from DU to CU-UP. E1 interface between CU-CP and CU-UP is enhanced for this purpose. NOTIFY PERFORMANCE MEASURES TO CU-UP is the message used for this purpose, which message is sent by the CU-CP to inform the performance measurements received from the DU to CU-UP using the Performance Measurement Index. NOTIFY PERFORMANCE MEASURES TO CU-UP is referenced by 2301 in FIG. 23. Step (II) is referenced by 2602 in FIG. 26.

Step (III): RRM analytics module at CU-UP analyzes the performance measures received from DU (via CU-CP, i.e., DU 4 CU-CP 4 CU-UP, with enhanced F1-C for DU 4 CU-CP and enhanced E1 for CU-CP 4 CU-UP), and derives a near-optimal policy (lookup table) using one of the techniques discussed below in the section discussing RRM related decisions using reinforcement learning (as part of Method 2). Step (III) is referenced by 2603 in FIG. 26.

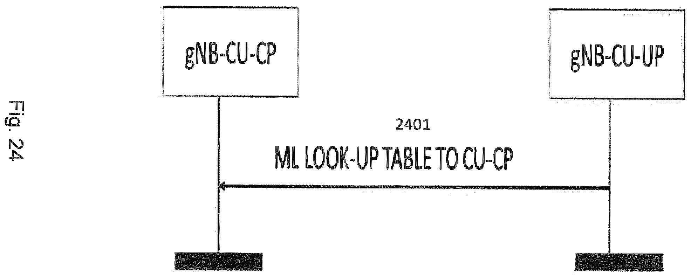

Step (IV): CU-UP communicates the policy (lookup table) to CU-CP. E1 interface is enhanced for this purpose. ML LOOKUP TABLE TO CU-CP is the message used for communicating the POLICY IE (shown in Table 3) to the CU-CP, as illustrated in FIG. 24. ML LOOKUP TABLE TO CU-CP is referenced by 2401 in FIG. 24. Step (IV) is referenced by 2604 in FIG. 26.

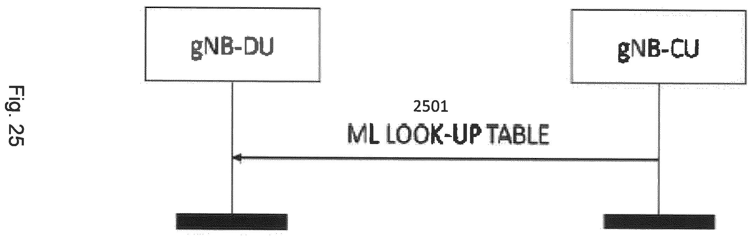

Step (V): CU-CP forwards the lookup table to DU. F1-C interface is enhanced for this purpose. ML LOOKUP TABLE is the message used for communicating the POLICY IE (shown in Table 3) to the DU, as illustrated in FIG. 25. DU maintains this policy for scheduling the UEs until a new policy is downloaded from CU-UP via CU-CP. ML LOOKUP TABLE is referenced by 2501 in FIG. 25. Step (V) is referenced by 2605 in FIG. 26.

Method 2 (RRM-related decisions using reinforcement learning): In this section, we describe the mapping of the RRM-related decision making process to a reinforcement learning problem by formalizing it using an MDP. As mentioned earlier, MDP involves four elements: States; Actions; Costs/Rewards; and Transition Probabilities. These elements are represented as follows:

○ S: A set of finite States S

○ A: A set of finite Actions A

○ C(s,a): Immediate cost (or expected immediate cost) incurred after transitioning from state "s" to state "*s*'", due to action "a".

○ P: represents the Transition probability matrix corresponding to state space S and action space A.

○ P(s'ls,a): Transition Probability of landing in state "s' " when action "a" is taken at state "s".

The above-listed elements are now defined for our traffic prediction problem, as follows. Let's assume there are K number of UEs in the system indexed as $UE_1$, $UE_2$, ...., $UE_K$. We first consider one LC (logical channel) per UE, but our methods are applicable to multiple LCs per UE too. In this MDP problem, we consider the time slots when there is data to communicate for at least one UE. For a particular UE, e.g., $UE_i$, the state $S_i$ is represented using the following variables: Buffer Occupancy (BO) at 5QI level; UE Channel State Information (CSI); UE Throughput; Packet delay at SQI level; Packet error rate (PER) at SQI level; and PF metric for that UE. The state S is the array of states of all the K UEs in the cell, represented as S= $(S_1, S_2...,S_K)$.

We quantize (or classify) the range of values taken by each state variable to n levels, where n is a finite value (e.g., n=4, 16 or a higher number, depending on the parameter being quantized).

<u>Normalized Buffer Occupancy (BO normalized):</u> We consider normalized BO for DRBs of different SQIs. For a particular SQI DRB of the $UE_i$, the normalized BO is BO for the particular SQI DRB of the $UE_i$ divided by the average packet size for that SQI in the cell. At the UE level, the normalized BO is a summation over all the normalized BOs of different SQI traffics carried by the UE. For example, if $UE_i$ is carrying the traffic of two different DRBs (one with 5QI 1 and another DRB with SQI 7), e.g., SQI 1 -VoNR DRB with its BO as Vi and 5QI 7 video streaming DRB with its BO as $V_2$, with average packet sizes as $A_1$ for 5QI 1 DRBs in that cell and $A_2$ for SQI 7 DRBs in that cell, then the BO_normalized for $UE_i$, which is represented as BO_normalizedi, is equal to $(V_1/A_1)$+ $(V_2/A_2)$. The range of values taken by BO_normalized for all the UEs is quantized to $n_1$ levels (for example 4 levels). For example, if the BO_normalized is in the range of [0, B], we divide them into four equal levels, and value between [0, B/4] is taken as 0, [B/4, B/2] is taken as B/4, [B/2, 3B/4] is taken as B/2, and [3B/4, B] is taken as 3B/4.

<u>UE Channel State Information (CSI):</u> The time and frequency resources that can be used by the UE to report CSI are controlled by the gNB. CSI can consist of Channel Quality Indicator (CQI), precoding matrix indicator (PMI), CSI-RS resource indicator (CRI), SS/PBCH Block Resource indicator (SSBRI), layer indicator (LI), rank indicator (RI), L1-RSRP or L1-SINR. As per 3GPP TS 38.214, CQI shall be calculated conditioned on the reported PMI, RI, and CRI. CQI reporting may be periodic or aperiodic. We consider the average CQI, or some alternate estimate of CQI is used to represent the UE channel conditions in each timeslot where the CQI is not reported (CQI index ranges from 0 to 15 in the 3GPP table, and higher the CQI index better the channel quality).

<u>Delay observed by packets of a DRB in DU:</u> We consider packet delay budget from the SQI table and estimate a target delay for packets of each DRB in the DU. For example, with PDB of 300 ms for SQI 9 (video streaming) DRB, we could have a target delay in DU for this DRB as 230 ms in a deployment scenario. We refer to this target delay as target DU PDB (e.g., target DU PDB is equal to 230 ms in this example). We quantize the delay experienced by packets of a DRB into $n_2$ different levels. We give an example for three levels here (i.e., $n_2$=3). For $UE_i$ with DRB of 5QI 9, if the waiting time of a packet in the DU for that DRB is within $X_1$ percentage of its target PDB in the DU, and $X_1$ is less than 80% of target DU PDB, it is classified as level 1 (e.g., "excellent"). If the waiting time in DU is between $X_1$ and $X_2$ percentage of target DU PDB (e.g., Xi=80% and $X_2$=105%), it is classified as level 2. If the waiting time in DU is above $X_2$ percentage, it is classified as level 3 in the context of target DU PDB.

<u>Throughput observed by DRBs of a UE at DU:</u> For $UE_i$ with GBR DRB traffic, if the achieved throughput exceeds the target by at least Yi percentage above the target throughput (e.g., if $Y_1$ is 10%, the achieved throughput is 110%, or above, the target GBR throughput), it is classified as level 1 (e.g., "excellent"). If the achieved throughput is between the target and target+$Y_1$ percentage (e.g., Yi=10%, the achieved throughput is between 100% to 110% of the target throughput), it is classified as level 2 (e.g., "good"). If the achieved throughput is between the target minus Yi and the target percentage (e.g., Yi=10%, the achieved throughput is between 90% to 100% of the target throughput), it is classified as level 3 (e.g., "average"). If the achieved throughput is below target minus Yi (e.g., below 90% of the target throughput), it is classified as level 4 (e.g., "poor").

<u>Packet error rate (PER) observed by DRBs of a UE:</u> We consider the packet error rate (PER) from the SQI table as the target PER for packets of each DRB in the DU. For $UE_i$ with traffic of any SQI (e.g., VoNR), if the observed PER is at least $Z_1$% of target PER (e.g., if $Z_1$ is equal to 50% and the target PER for VoNR is $10^{-2}$, meaning one packet error out of every 100 packets, the observed PER should be at least $½*10^{-2}$ => one packet error out of every 200 or more packets), it is classified as level 1 (e.g., "excellent"). If the observed PER is between $Z_1$% and $Z_2$% of the target PER (e.g., for VoNR, if $Z_1$ is equal to 50% and $Z_2$ is equal to 100%, the observed PER is between $½*10^{-2}$ to $10^{-2}$), it is classified as level 2 (e.g.,

"good"). If the observed PER is between $Z_2$% and $Z_3$% of the target PER (e.g., for VoNR, if $Z_2$ is equal to 100% and $Z_3$ is equal to 150%, the observed PER is between $10^{-2}$ to $1.5*10^{-2}$), it is classified as level 3 (e.g., "average"). If the observed PER is above $Z_3$% of the target PER (e.g., for VoNR, if $Z_3$ is equal to 150%, the observed PER is more than $1.5*10^{-2}$), it is classified as level 4 (e.g., "poor"). If there are multiple SQI flows per a given UE, then we consider the worst-case PER of the SQI as the UE level PER and classify it as one of the multiple levels described above.

Action (A): We consider the action space as binary for each UE. For $UE_i$ with action space represented as $a_i(t) \in \{0,1\}$, $a_i(t)=1$ represents scheduling the UE, (allocate PRBs based on various policies), and $a_i(t)=0$ represents not scheduling the UE i (i.e., not to allocate any PRBs to UE i). The common action across all K UEs in the cell is represented as an array of actions for each individual UE, i.e., $(a_1, a_2..., a_K)$. It should be noted that, at time t, if there is no data for a particular UE, then this UE is not scheduled, and the corresponding action for this UE is $a_i(t)=0$.

**Transition probabilities (P):** For the K UEs in the cell, if the realized state at time t represented as $\bar{s}= (s_1, s_2...,s_K)$ and if the corresponding realized action at time t is $\bar{a}= (a_1,a_2...,a_K)$ then it is the probability of reaching to state $\bar{s'}= (s'_1, s'_2...,s'_K)$ at time t+1. It is mathematically represented as $P(S(t+1) =(s'_1, s'_2...,s'_K)|S(t)= (s_1, s_2...,s_K), A(t)=(a_1,a_2...,a_K))$. As the state space is finite, represent its cardinality $|S|=b$ and the action space is finite (which is binary) its cardinality $|A|=2$. So, the transition probability matrix is of finite size and it's cardinality $|P|=b*2$. For example, if the six state variables in the state space are quantized into $n_1, n_2, n_3, n_4, n_5, n_6$ respectively. The state space cardinality is $|S|=b= (n_1*n_2*n_3*n_4*n_5*n_6)^K$ The actions at each UE state are two implies $2^K$ possibilities for K UEs in the cell. So, the transition probability matrix is of size $(n_1*n_2*n_3*n_4*n_5*n_6*2)^K$.

Table 4 below provides an illustrative example to show the dimensions of the lookup table. In this example, let's assume there are 3 UEs in the cell and each of the state variables for any UE can take two values, as follows: Normalized _BO can be {0,1}; CQI (of CSI) can be {3, 10}; packet delay can be {Good, Bad}; throughput can be {Good, Bad}; packet error rate can be {Good, Bad}; and PF metric can be {Low, High}. In this case, the state space can be represented as shown in the Table 4**Errore. L'origine riferimento non è stata trovata.** with the 64 possible states. There are six state variables and each state variable takes two values, which means $2^6=64$ combinations are possible. In addition, state space is finite, and at each state there are two possible actions, A={0,1}, so the transition probability matrix is of size $(64*2)^3=2097152$.

TABLE 4

| S.No. | Normalized_BO | CQI (of CSI) | packet delay | throughput | packet error rate | PF |
|---|---|---|---|---|---|---|
| 1 | 0 | 3 | Good | Good | Good | Low |
| 2 | 0 | 3 | Good | Good | Good | High |
| 3 | 0 | 3 | Good | Good | Bad | Low |
| | | | | | | |
| | | | | | | |
| 63 | 1 | 10 | Bad | Bad | Bad | Low |
| 64 | 1 | 10 | Bad | Bad | Bad | High |

We can use hashing and/or other techniques to reduce the computational effort of this method.

For the sake of clarity and easier explanation, we have considered binary CQI indices. However, shown below in TABLE 5 is an actual CQI table from 3GPP TS 38.214 with the indices ranges from 0 to 15, which represent a bigger state space.

TABLE5

| CQI index | modulation | code rate x 1024 | efficiency |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |

(continued)

| CQI index | modulation | code rate x 1024 | efficiency |
|---|---|---|---|
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

Costs (C(s,a)): At time t, the immediate cost for $UE_i$ when this $UE_i$ is in state 's' with action 'a' is represented as $C(s_i(t)=s, a_i(t)=a)= C^i(s(t), a(t))$. The cost of all the K UEs in the cell $C(\bar{s}, \bar{a})= C((s_1, s_2...,s_K), (a_1, a_2..., a_K))$ is simply the sum over all the individual costs, i.e., $C(\bar{s}, \bar{a}) = \sum_{i=1}^{K} C^i(s(t), a(t))$. For each UE, the cost can be written as a function of costs associated with each state variable as shown below. The overall cost is a weighted sum of the costs associated with the BO, GBR, PDB, PER, and PF state variables and cell level cost. Here, $C_{CL}(\bar{s}(t), \bar{a}(t))$ represents the cell level cost associated with all the active UEs in the cell. The vector notation $\bar{s}(t), \bar{a}(t)$ represents the set of states and actions of all the active UEs.

$$C\big((\bar{s}(t), \bar{a}(t))\big) = w_1 * C_{BO}(\bar{s}(t), \bar{a}(t)) + w_2 * C_{GBR}(\bar{s}(t), \bar{a}(t)) + w_3 * C_{PDB}(\bar{s}(t), \bar{a}(t)) + w_4 * C_{PER}(\bar{s}(t), \bar{a}(t)) + w_5 * C_{PF}(\bar{s}(t), \bar{a}(t)) + w_6 * C_{CL}(\bar{s}(t), \bar{a}(t))$$

Below, we have defined C' (s(t), a(t)) as individual UE level costs of each of the state variable, and summing them over all the active UEs in the cell will result in the cell level cost as required in the above equation. For inactive UEs, the optimal action is not to schedule, and the associated cost is always zero as long as they stay inactive. Now we define each of these cost functions below.

The BO immediate cost: The BO immediate cost for a UE when the action is equal to zero (i.e., this UE is not scheduled) is $BO\_normalized_i$. The BO immediate cost when the action is equal to one is sum of $c_i^{BO}$ and min {0, $BO\_normalized_i$ - $Sched\_data\_normalized_i$}, where $c_i^{BO}$ is the cost for scheduling $UE_i$ with its BO and $Sched\_data\_normalized_i$ is summation over normalized scheduled data per SQI level (similar to that of $BO\_normalized_i$). At UE level, normalized scheduled data is summation over all the normalized scheduled data of different SQI traffics carried by the UE. For example, if UE, is carrying traffic of two different DRBs (e.g., one with 5QI 1 and another DRB with SQI 7), 5QI 1 -VoNR DRB with its scheduled data as $U_1$ and SQI 7 Video streaming DRB with its scheduled data as $U_2$, with average packet sizes as $A_1$ for 5QI 1 DRBs in that cell and $A_2$ for 5QI 7 DRBs in that cell, then the normalized scheduled data for $UE_i$ which is represented as $Sched\_data\_normalized_i$ is equal to $(U_1/A_1)+ (U_2/A_2)$. Accordingly, the following expanded equation for the BO immediate cost is provided:

$$C_{BO}^i\big(s(t), a(t)\big) = \begin{cases} BO\_normalized_i(t), & a = 0 \\ c_i^{BO} + \min \{0, BO\_normalized_i(t) - Sched\_data\_normalized_i(t)\}, & a = 1 \end{cases}$$

The PDB immediate cost: The PDB immediate cost for a $UE_i$ when the action is equal to zero is the maximum of zero and the difference of the RLC queuing delay ($Qdelay_{RLC,i}$) and the PDB. When the action is equal to one, the PDB immediate cost is simply the cost for taking action equal to one, which is $c_i^{PDB}$. $Qdelay_{RLC,I} = (t_i - T_{RLC,i})$ is the delay of the oldest RLC packet in the QoS flow that has not been scheduled yet and is calculated as the difference in time between the SDU insertion in RLC queue to current time, where t := current time instant, $T_{RLC}$ := time instant when oldest SDU was inserted in RLC. The PDB also corresponds to the oldest RLC packet in the QoS flow that has not been scheduled yet. Accordingly, the following expanded equation for the PDB immediate cost is provided:

$$C_{PDB}^i\big(s(t),a(t)\big) = \begin{cases} \max\{0, \mathrm{Qdelay_{RLC,i}}(t) - \mathrm{PDB_i}\}, & a = 0 \\ c_i^{PDB}, & a = 1 \end{cases}$$

<u>The GBR immediate</u> cost: The GBR immediate cost for a UE when the action is equal to zero is the remaining data. The GBR immediate cost when the action is equal to one is the sum of $c_i^{GBR}$ and the difference of remaining data (remData) and scheduled data (schedData).

i) targetData is the total data bits to be served in each averaging window $T_{avg\_win}$ (2000msec as per 3GPP TS 23.501) to meet the GFBR of the given QoS flow.

ii) remData is the amount of data bits remaining to be served within the time left in the current averaging window to meet the GFBR of the given QoS flow.

iii) SchedData is the amount of data bits scheduled in the current timeslot to meet the GFBR of the given QoS flow.

The following expanded equation for the GBR immediate cost is provided:

$$C_{GBR}^i\big(s(t),a(t)\big) = \begin{cases} \mathrm{remData}(t), & a = 0 \\ c_i^{GBR} + (\mathrm{remData}(t) - \mathrm{schedData}(t)), & a = 1 \end{cases}$$

<u>The PER immediate</u> cost: The PER immediate cost for a UE when the action is equal to zero is the previous slot PER value, i.e., PER(t-1). The PER immediate cost when the action is equal to one is the sum of $c_i^{PER}$ and current slot PER value, i.e., PER(t). As per 3GPP TS 23.501, PER defines an upper bound for the rate of PDUs (e.g., IP packets) that have been processed by the sender of a link layer protocol (e.g., RLC in RAN of a 3GPP access) but that are not successfully delivered by the corresponding receiver to the upper layer (e.g., PDCP in RAN of a 3GPP access). The PER defines an upper bound for a rate of non-congestion related packet losses. PER at time t is the ratio of number of packets not successfully delivered by the receiver to the upper layers to the number of packets transmitted. Accordingly, PER(t-1) and PER(t) can be expressed as follows:

$$\mathrm{PER}(t-1) = \frac{\mathrm{no\_of\_pkts\_not\_succ\_delivered}(t-1)}{\mathrm{no\_of\_pkts\_transmitted}(t-1)}$$

$$\mathrm{PER}(t) = \frac{\mathrm{no\_of\_pkts\_not\_succ\_delivered}(t)}{\mathrm{no\_of\_pkts\_transmitted}(t)}$$

$$\mathrm{PER}(t) = \frac{\mathrm{PER}(t-1) * \mathrm{no\_of\_pkts\_transmitted}(t-1) + \mathrm{pkts\_unsuccessful\_t}}{\mathrm{no\_of\_pkts\_transmitted}(t-1) + \mathrm{pkts\_transmitted\_t}}$$

In the above expressions, pkts_unsuccessful_t is the number of packets not successfully delivered in time-slot t, pkts_transmitted_t is the number of packets transmitted in time-slot t. The following expanded equation for the PER immediate cost is provided:

$$C_{PER}^i\big(s(t),a(t)\big) = \begin{cases} \mathrm{PER}(t-1), & a = 0 \\ c_i^{PER} + \mathrm{PER}(t), & a = 1 \end{cases}$$

<u>The PF immediate</u> cost: The PF immediate cost for a UE when the action is equal to zero is the difference of $\mathrm{PF_{max}}$ and the ratio of $r_i(t)$ to the $R_{avg,i}(t-1)$. The PF immediate cost for a UE when the action is equal to one is the difference of

$c_i^{PF} + \mathrm{PF_{max}}$ and the ratio $\dfrac{r_i(t)}{\alpha * R_{avg,i}(t-1) + (1-\alpha) * b_i(t)}$ .

a) $PF_{max}$ is the global maximum PF value across all the UEs (take it as a large positive integer);

b) $r_i(t)$ is the $UE_i$ spectral efficiency calculated based on one RB and its last reported CQI;

c) $\alpha * R_{avg,i}(t-1) + (1-\alpha) * b_i(t)$ is the $UE_i$ average throughput, where $b_i(t) >= 0$ is the number of bits scheduled in current time-slot t, and $0 < \alpha <= 1$ is the IIR filter coefficient; and

d) $c_i^{PF}$ is the cost for scheduling the $UE_i$.

The following expanded equation for the PF immediate cost is provided:

$$C_{PF}^i(s(t), a(t)) = \begin{cases} PF_{max} - \dfrac{r_i(t)}{R_{avg,i}(t-1)}, & a = 0 \\ c_i^{PF} + PF_{max} - \dfrac{r_i(t)}{\alpha * R_{avg,i}(t-1) + (1-\alpha) * b_{i,0}(t)}, & a = 1 \end{cases}$$

The cell-throughput-related immediate cost: The cell throughput related immediate cost is defined as follows:

$$C_{CL}(\bar{s}(t), \bar{a}(t)) = Peak\_Thp - \left( \frac{(t-1) * Avg\_Cell\_Thp(t-1) + Thp\_in\_slot\_t}{t} \right)$$

a) Peak_Thp is the cell level theoretical peak throughput;

b) Avg_Cell_Thp(t) is the average cell level throughput at time t (averaged over time); and

c) Thp_in_slot_t is the MAC level volume of data transmitted across all active UEs in slot t.

As we mentioned earlier, now the overall cost function C' (s(t), a(t)) is the sum of weighted cost functions of the state variables BO, PDB, GBR, PER, and PF, and the cell level cost, as shown below.

$$C\left((\bar{s}(t), \bar{a}(t))\right) = w_1 * C_{BO}(\bar{s}(t), \bar{a}(t)) + w_2 * C_{GBR}(\bar{s}(t), \bar{a}(t)) + w_3 * C_{PDB}(\bar{s}(t), \bar{a}(t)) + w_4 * C_{PER}(\bar{s}(t), \bar{a}(t)) + w_5 * C_{PF}(\bar{s}(t), \bar{a}(t)) + w_6 * C_{CL}(\bar{s}(t), \bar{a}(t))$$

We can have multiple variants for this cost function, e.g., by just considering some of the state variables by making the selected weight factors as zero based on the policies that we want to use. For example, one can consider overall cost as a function of PDB, GBR and PF, i.e.,

$$C\left((\bar{s}(t), \bar{a}(t))\right) = w_2 * C_{GBR}(\bar{s}(t), \bar{a}(t)) + w_3 * C_{PDB}(\bar{s}(t), \bar{a}(t)) + w_5 * C_{PF}(\bar{s}(t), \bar{a}(t))$$

From Value function, we can observe that for each state there is an associated immediate cost and the additional discounted costs associated with the subsequent state and action pairs. The discount factor essentially determines how much the reinforcement learning agents care about costs in the distant future relative to those in the immediate future. Normally, discount factor ranges from 0 to 1, i.e., $\gamma \in [0,1)$.

Value iteration (Policy 1): For the unknown transition probability matrix, we initialize the matrix with zero and update it in the following manner. At state $\bar{s} = (s_1, s_2..., s_K)$ after taking action $\bar{a} = (a_1, a_2..., a_K)$, the system lands in state $\bar{s}' = (s'_1, s'_2..., s'_K)$, then we update $P(\bar{s}'|\bar{s}, \bar{a}) = 1$. Later at same state $\bar{s}$, taking the same action "a", the system lands in $\bar{s}''$, then we update $P(\bar{s}'|\bar{s}, \bar{a}) = P(\bar{s}''|\bar{s}, \bar{a}) = 0.5$. We update the transition probabilities based on the different states it landed upon and the number of times landed upon on each state. For example, for state 's', taking action "a" 100 times resulted in landing upon states $\bar{s}', \bar{s}'', \bar{s}'''$ for 20, 30, and 50 times, respectively, then the updated transition probabilities are given as follows:

$F(\bar{s}'|\bar{s}, \bar{a}) = 0.2$, $P(\bar{s}''|\bar{s}, \bar{a}) = 0.3$, $P(\bar{s}'''|\bar{s}, \bar{a}) -- 0.5$. This process can be called the learning phase of the MDP.

Step 1: Initialize $V_0 \in V$ (e.g., initialize with zero for each state) for each state. Specify $\varepsilon > 0$ (a small positive value), and set n=0 (iteration).

Step 2: For each state $\bar{s} \in S$, compute $V_{n+1}(\bar{s}, \bar{a})$ by

$$V_{n+1}(\bar{s}, \bar{a}) = \min_{\bar{a} \in A}\{ C(\bar{s}, \bar{a}) + \gamma \sum_{\bar{s}'} P(\bar{s}'|\bar{s}, \bar{a}) V_n(\bar{s}')\}$$

Step 3: If $\|V_{n+1}(\bar{s}, \bar{a}) - V_n(\bar{s}, \bar{a})\| < \varepsilon^*(1-\gamma)/2\gamma$, go to Step 4. Otherwise, increment n by 1 and return to Step 2.

Step 4: For each $\bar{s} \in S$, choose optimal action as $\underset{\bar{a} \in A}{\operatorname{argmin}}\{ C(\bar{s}, \bar{a}) + \gamma \sum_{\bar{s}'} P(\bar{s}'|\bar{s}, \bar{a}) V_n(\bar{s}')\}$ and stop.

Policy 2: After the initial learning of transition probabilities as mentioned in Policy 1, we run the reinforcement learning method with exploration and exploitation strategy. In the exploration stage, we choose the action from the set of all possible actions uniformly at random. For example, in a given time slot, if there are four active UEs, then there are sixteen possible combinations of actions, i.e., {0000,0001...,1111}. If the policy chooses exploration, then it chooses any one of the actions from the 16 possible actions with 1/16 probability. In the exploitation stage, Policy 2 chooses the action that gave the minimum cost till now (during the training phase). For example, in a given time slot, if the policy chooses exploitation and has seen three actions {0000, 0011, 1111} till now, and the associated costs are 10, 20, and 30, respectively, then the policy chooses the action corresponding to the minimum cost, which is 10, i.e., the policy chooses action 0000. In this method, exploitation is chosen with probability (1 minus delta) and exploration is chosen with probability delta . Here, delta is a parameter controlling the amount of exploration vs. exploitation. This "delta" parameter could be a fixed parameter or it can be adjusted either according to a schedule (e.g., making the agent explore progressively less), or adaptively based on some policies.

For a finite state space with finite actions, we can obtain near-optimal action for each state. Once the policy is decided, it is used to create a candidate list of UEs which can be scheduled (for a given state) in a given slot. A subset of UEs is picked up from this candidate list and allocated resources based on some policies which could consider QoS requirements (such as delay, throughput, etc.), buffer depth (of pending packets at the base station for the corresponding logical channel), and other parameters for each UE.

In a given slot and for a given state of the system, candidate UEs to serve in a slot are selected as per Policy 1 or Policy 2 above. A given base station system can serve only a certain number of UEs in slot (e.g., max Z UEs in a slot). If the number of selected candidate UEs is higher than what the base station can serve in that slot (i.e., Z in this example), the radio resource management (RRM) module selects Z UEs using various policies (e.g., selecting Z UEs which have packets that may miss their delay targets if not scheduled, or selecting Z UEs which may miss their throughput and delay targets if not scheduled). These selected UEs (i.e., Z UEs from the candidate set if the number of UEs in the candidate set is more than Z, or all the candidate UEs if the number of candidate UEs is less than Z) are allocated resources (e.g., PRBs) based on another set of policies (e.g., drain full buffer for each selected UE, or serve a subset of packets queued for each UE and give opportunity to more of the Z UEs to be served in that slot) as long as PRBs are available in that slot.

While the present disclosure has been described with reference to one or more exemplary embodiments, it will be understood by those skilled in the art that various changes may be made and equivalents may be substituted for elements thereof without departing from the scope of the present disclosure. For example, although the example methods have been described in the context of 5G cellular networks, the example methods are equally applicable for 4G, 6G and other similar wireless networks. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

For the sake of completeness, a list of abbreviations used in the present specification is provided below:

5GC: 5G Core Network
5GNR: 5G New Radio
SQI: 5G QoS Identifier
ACK: Acknowledgement
AI: Artificial Intelligence
AM: Acknowledged Mode
APN: Access Point Name
ARP: Allocation and Retention Priority
BO: Buffer Occupancy
BS: Base Station

CP: Control Plane
CSI: Channel State Information
CU: Centralized Unit
CU-CP: Centralized Unit - Control Plane
CU-UP: Centralized Unit - User Plane
DL: Downlink
DDDS: DL Data Delivery Status
DNN: Data Network Name
DQN: Deep Q Network
DRB: Data Radio Bearer
DU: Distributed Unit
eNB: evolved NodeB
EPC: Evolved Packet Core
EN-DC: E-UTRAN New Radio Dual Connectivity
GBR: Guaranteed Bit Rate
gNB: gNodeB
GTP-U: GPRS Tunnelling Protocol - User Plane
IP: Internet Protocol
L1: Layer 1
L2: Layer 2
L3: Layer 3
L4S: Low Latency, Low Loss and Scalable Throughput
LC: Logical Channel
MAC: Medium Access Control
MDP: Markov Decision Process
ML: Machine Learning
MR-DC: Multi-RAT Dual Connectivity
NACK: Negative Acknowledgement
NAS: Non-Access Stratum
NG-RAN: Next Generation Radio Access Network
NR-U: New Radio - User Plane
NSI: Network Slice Instance
NSSI: Network Slice Subnet Instance
NWDAF: Network Data Analytics Function
O-RAN: Open Radio Access Network
OAM: Operations, Administration Maintenance
PDB: Packet Delay Budget
PDCP: Packet Data Convergence Protocol
PDU: Protocol Data Unit
PER: Packet Error Rate
PF: Proportional Fair
PHY: Physical Layer
PRB: Physical Resource Block
QCI: QoS Class Identifier
QFI: QoS Flow Identifier
QoS : Quality of Service
RAN: Radio Access Network
RAT: Radio Access Technology
RB: Resource Block
RDI: Reflective QoS Flow to DRB Indication
RL: Reinforcement Learning
RLC: Radio Link Control
RLC-AM: RLC Acknowledged Mode
RLC-UM: RLC Unacknowledged Mode
RQI: Reflective QoS Indication
RRC: Radio Resource Control
RRM: Radio Resource Management
RTP: Real-Time Transport Protocol

RTCP: Real-Time Transport Control Protocol
RU: Radio Unit
SCTP: Stream Control Transmission Protocol
SD: Slice Differentiator
SDAP: Service Data Adaptation Protocol
SLA: Service Level Agreement
S-NSSAI: Single Network Slice Selection Assistance
SST: Slice / Service Type
TCP: Transmission Control Protocol
TEID: Tunnel Endpoint Identifier
UE: User Equipment
UP: User Plane
UL: Uplink
UM: Unacknowledged Mode
UPF: User Plane Function

**Claims**

1. A method for performing optimized radio resource management (RRM) in an O-RAN network, comprising:

    performing, at an RRM analytics module, a machine learning-based analysis to determine an optimal resource allocation policy based on at least one performance measurement performed at a distributed unit (DU);
    receiving, by the DU, the optimal resource allocation policy determined by the RRM analytics module; and
    utilizing, by the DU, the optimal resource allocation policy to one of schedule or not schedule selected user equipments (UEs).

2. The method of claim 1, further comprising:

    arranging, for a given time slot, active UEs in a decreasing order of corresponding buffer occupancy (BO), based on at least one selected policy; and
    allocating physical resource blocks (PRBs) for a selected active UE if the corresponding optimal action for the selected active UE is to schedule resources for the selected active UE.

3. The method of claim 2, wherein the RRM analytics module is located at a near-real time radio intelligent controller (Near-RT RIC), the method further comprising:
    subscribing, by the Near-RT RIC from the DU, performance measurements information used to configure the optimal resource allocation policy to be utilized by DU.

4. The method of claim 3, wherein the performance measurements information comprises at least one of: buffer occupancy (BO) at SQI level; UE channel state information (CSI); UE throughput; packet delay at SQI level; packet error rate (PER) at SQI level; and proportional-fair (PF) metric.

5. The method of claim 1, wherein the RRM analytics module is located at a near-real time radio intelligent controller (Near-RT RIC), the method further comprising:
    subscribing, by the Near-RT RIC from the DU, performance measurements information used to configure the optimal resource allocation policy to be utilized by DU.

6. The method of claim 5, wherein the performance measurements information comprises at least one of: buffer occupancy (BO) at SQI level; UE channel state information (CSI); UE throughput; packet delay at SQI level; packet error rate (PER) at SQI level; and proportional-fair (PF) metric.

7. The method of claim 1, wherein the RRM analytics module is located at a centralized unit-user plane (CU-UP), the method further comprising:

    sending, by the DU to a centralized unit-control plane (CU-CP), selected performance measurements;
    relaying, by the CU-CP to the CU-UP, the selected performance measurements sent by the DU; and
    analyzing, by the RRM analytics module at CU-UP, the selected performance measurements to derive the optimal resource allocation policy to be utilized by the DU.

8. The method of claim 7, wherein the selected performance measurements comprise at least one of: buffer occupancy (BO) at SQI level; UE channel state information (CSI); UE throughput; packet delay at SQI level; packet error rate (PER) at SQI level; and proportional-fair (PF) metric.

9. The method of claim 2, wherein the RRM analytics module is located at a centralized unit-user plane (CU-UP), the method further comprising:

    sending, by the DU to a centralized unit-control plane (CU-CP), selected performance measurements;
    relaying, by the CU-CP to the CU-UP, the selected performance measurements sent by the DU; and
    analyzing, by the RRM analytics module at CU-UP, the selected performance measurements to derive the optimal resource allocation policy to be utilized by the DU.

10. The method of claim 9, wherein the selected performance measurements comprise at least one of: buffer occupancy (BO) at SQI level; UE channel state information (CSI); UE throughput; packet delay at SQI level; packet error rate (PER) at SQI level; and proportional-fair (PF) metric.

11. The method of claim 1, wherein the machine learning-based analysis is implemented as a Markov Decision Process (MDP) involving i) a set of states, ii) a set of actions, iii) cost incurred upon transitioning from a first state to a second state due to a given action, and iv) transition probability of landing in the second state when the given action is taken in the first state.

12. The method of claim 11, wherein for a UE, a state is represented using the following variables: buffer occupancy (BO) at SQI level; UE channel state information (CSI); UE throughput; packet delay at SQI level; packet error rate (PER) at SQI level; and proportional-fair (PF) metric for the selected active UE.

13. The method of claim 12, wherein for a UE, the cost incurred comprises at least one of i) buffer occupancy immediate cost, ii) packet delay budget (PDB) immediate cost, iii) guaranteed bit rate (GBR) immediate cost, iv) packet error rate (PER) immediate cost, v) PF immediate cost, and vi) cell-throughput-related immediate cost.

14. The method of claim 13, wherein the transition probability of landing in the second state when the given action is taken in the first state is learned in a learning phase of the MDP.

15. The method of claim 14, wherein the MDP further comprises:

    an exploration stage in which, for a selected number of active UEs, different possible combinations of actions for the active UEs are chosen; and
    an exploitation stage in which, for the selected number of active UEs in a given time slot, a selected combination of actions corresponding to the minimum cost among the different possible combination of actions is chosen as the optimal resource allocation policy.

Fig. 1

Fig. 2

Fig. 3

Fig. 4

Fig. 5

Fig. 6

EP 4 554 324 A1

| IE/Group Name | Presence | Range |
|---|---|---|
| Message Type | M | |
| gNB-CU UE F1AP ID | M | |
| gNB-DU UE F1AP ID | M | |
| DRB Notify List | | 1 |
| >DRB Notify Item IEs | | <1 .. maxnoofD RBs> |
| >>DRB ID | M | |
| >>Notification Cause | M | |
| >>Current QoS Parameters Set Index | O | |

| Range Bound | Explanation |
|---|---|
| maxnoofDRBs | Maximum number of DRBs allowed towards one UE; the maximum value is 64. |

Fig. 7

| IE/group name | Presence | Range | IE type and reference | Semantics description |
|---|---|---|---|---|
| Alternative QoS Parameters Set Notify Index | M | | Integer (0 . . 8, ...) | Indicates the index of the items within the Alternative QoS Parameters Set List IE corresponding to the currently fulfilled alternative QoS parameters set. Value 0 indicates that NG-RAN cannot fulfill even the lowest alternative parameter set. |

Fig.8

33

| IE/Group Name | Presence | Range |
|---|---|---|
| **Alternative QoS Parameters Set Item** | | *1..<maxnoofQ oSParaSets>* |
| >Alternative QoS Parameters Set Index | M | |
| >Guaranteed Flow Bit Rate Downlink | O | |
| >Guaranteed Flow Bit Rate Uplink | O | |
| >Packet Delay Budget | O | |
| >Packet Error Rate | O | |

| Range Bound | Explanation |
|---|---|
| maxnoofQoSParaSets | Maximum number of alternative sets of QoS Parameters allowedfor the QoS profile; the value is 8. |

Fig. 9

Fig. 10

Fig. 11

Fig. 12

Fig. 13

Fig. 14

101
UE x

102
gNodeB (RU, DU, CU)

903
UPF

9011a
DNN
(e.g. for internet services)

PDU Session I for UE x, Slice id s1 (SST, SD)

DRB y1

NG-U: GTP-U tunnel for PDU session 1

QFI q1 (with 5QI h1 for non-GBR)

IP Flows

QFI q2 (with 5QI h2 for non-GBR)

DRB y2

QFI q3 (with 5QI h3 for GBR)

9011b
DNN
(for IMS services)

PDU Session II for UE x. Slice id s2

DRB z1

NG-U: GTP-U tunnel for PDU session 2

QFI q4 (with 5QI h4 for GBR)

QFI q5 (with 5QI h5 for GBR)

DNN: Data Network Name, QFI: QoS Flow Identifier, UPF: User Plane Function (of 5G Core), 5QI: 5G QoS Identifier, DRB: Data Radio Bearer, GBR: Guaranteed Bit Rate, SST: Slice / Service Type, SDD: Slice Differentiator

Fig. 15

EP 4 554 324 A1

Downlink (DL) IP packets

903 UPF (as part of 5G core network)

One GTP-U tunnel per
PDU session between UPF and CU-UP

(e.g. 10s or 100s of thousands of
PDU sessions and DRBs per CU-UP)

504
 SDAP at CU-UP: QoS
flows mapped to DRBs

PDU
Session 1

PDU
Session 2

304b **CU-UP:**
SDAP,
PDCP

One GTP-U tunnel per
DRB between CU-UP and DU

DRB1    DRB2

DRB3
DRB4

305

(e.g. Thousands of DRBs per DU)

**DU:** RLC,
    MAC,
    PHY (upper parts)

1001   MAC Scheduler

One (logical) RLC queue per DRB
(or per logical channel)

PHY (upper parts)

306  RU

101

UE x1    UE x2    UE x3    UE xm    UE xn

Fig. 16

40

Fig. 17

1801 Initialize the Q-table

1802 Select an action to perform

1803 Perform the selected action

1804 Find the associated cost

1805 Update the Q-table

Fig. 18

Fig. 19

Fig. 20

Near-RT RIC

DU

2101
1. RIC subscription procedure (near-RT-RIC, DU)

2102
2. (Report) Various parameters for each UE
from DU to near-RT-RIC [E2 RIC Indication (report)]

2103
3.
- Data analysis
- Decision making to achieve optimal resource allocation (policy)

2104
4. Near-RT RIC sends the policy (lookup table) based on RIC trigger event

2105
5. DU modifies ongoing policy with the new policy

Repeat steps 2 to 5

Fig. 21

45

```
┌──────────────┐                                    ┌──────────────┐
│   gNB-DU     │                                    │   gNB-CU     │
└──────────────┘                                    └──────────────┘
        │                        2201                        │
        │          NOTIFY PERFORMANCE MEASURES               │
        │──────────────────────────────────────────────────▶│
        ▄                                                    ▄
```

Fig. 22a

| IE/Group Name | Presence | Range | IE Type and Reference |
|---|---|---|---|
| Message Type | M | | |
| gNB-CU UE F1AP ID | M | | |
| gNB-DU UE F1AP ID | M | | |
| Performance Measurement Index | O | | |

Fig. 22b

Fig. 23

gNB-CU-CP

gNB-CU-UP

NOTIFY PERFORMANCE MEASURES TO CU-UP

2301

Fig. 24

```
┌──────────────┐                              ┌──────────────┐
│  gNB-CU-CP   │                              │  gNB-CU-UP   │
└──────────────┘                              └──────────────┘
        │                    2401                      │
        │        ML LOOK-UP TABLE TO CU-CP             │
        │◄─────────────────────────────────────────────│
        │                                              │
      ▬▬▬▬                                          ▬▬▬▬
```

Fig. 25

gNB-DU

gNB-CU

2501
ML LOOK-UP TABLE

**2602**
(II) Performance measurements from CU-CP to RRM analytics module at CU-UP. These include communicating performance measures from DU → CU-CP → CU-UP  [*E1 interface enhanced for this*]

CU-UP
(RRM analytics module)

CU-CP

**2604**
(IV) CU-UP communicates the policy (lookup table) to CU-CP. E1 interface is enhanced for this.

**2601**
(I) Performance measurements from DU to RRM analytics module at CU-UP, routed via CU-CP [*F1-C interface enhanced for this*]

(III)  **2603**
- Data analysis
- Decision making to achieve optimal resource allocation (policy)

**2605**
(V) CU-CP forwards this table to DU. F1-C interface is enhanced for this. DU maintains this policy for scheduling the UEs still a new policy is received from CU-UP via CU-CP.

DU

Fig. 26

Europäisches
Patentamt
European
Patent Office
Office européen
des brevets

# EUROPEAN SEARCH REPORT

**Application Number**

EP 24 21 1511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | O-RAN WORKING GROUP 2: "O-RAN Working Group 2. Non-RT RIC & A1 Interface: Use Cases and Requirements. O-RAN.WG2.Use-Case-Requirements-v06.00", O-RAN SPECIFICATION, O-RAN, DE, PAGE(S) 1 - 72 , 1 June 2022 (2022-06-01), XP009555958, Retrieved from the Internet: URL:https://specifications.o-ran.org/specifications | 1-10 | INV. H04W88/08 ADD. H04W72/52 H04W72/542 |
| Y | * paragraph [03.6] - paragraph [3.6.1] * * paragraph [3.6.3.1] * * paragraph [3.7.1.2] - paragraph [3.7.1.3] * * paragraph [3.7.2.2] * * paragraph [3.7.2.3.1] * * paragraph [3.7.3.2] * * tables 3.2.3.-1 * * tables 3.7.2.3-1 * * tables 3.7.2.3-2 * * tables 3.7.3.3.1-1 * | 11-15 | |
| | ----- | | **TECHNICAL FIELDS SEARCHED (IPC)** |
| Y | WO 2023/091664 A1 (INTEL CORP [US]) 25 May 2023 (2023-05-25) | 1,5-15 | H04W |
| A | * paragraph [0001] - paragraph [0003] * * paragraph [0034] - paragraph [0035] * * paragraph [0066] * * paragraph [0146] * * paragraph [0180] - paragraph [0192] * * paragraph [0206] * * paragraph [0307] - paragraph [0308] * * paragraph [0311] * * paragraph [0318] * * paragraph [0493] * * claim 5 * | 2-4 | |
| | ----- | | |
| | -/-- | | |

The present search report has been drawn up for all claims

| Place of search | Date of completion of the search | Examiner |
|---|---|---|
| The Hague | 12 February 2025 | Vaskimo, Kimmo |

EPO FORM 1503 03.82 (P04C01)

Europäisches
Patentamt

European
Patent Office

Office européen
des brevets

# EUROPEAN SEARCH REPORT

**Application Number**

EP 24 21 1511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/258866 A1 (CHOU JOEY [US]) 19 August 2021 (2021-08-19) | 1,5-15 | |
| A | * paragraph [0001] - paragraph [0008] * <br> * paragraph [0121] - paragraph [0123] * <br> * paragraph [0158] - paragraph [0162] * <br> * paragraph [0164] - paragraph [0166] * <br> * paragraph [0176] - paragraph [0180] * <br> * table 1 * <br> * claims 1,9 * <br> * paragraph [0036] * <br> ----- | 2-4 | |
| Y | WO 2023/153898 A1 (SAMSUNG ELECTRONICS CO LTD [KR]) 17 August 2023 (2023-08-17) | 1,5-15 | |
| A | * paragraph [0001] - paragraph [0031] * <br> * paragraph [0046] * <br> ----- | 2-4 | |
| Y | US 2021/377804 A1 (SIVARAJ RAJARAJAN [US] ET AL) 2 December 2021 (2021-12-02) | 1,5-15 | |
| A | * paragraph [0001] - paragraph [0005] * <br> * paragraph [0056] - paragraph [0057] * <br> ----- | 2-4 | **TECHNICAL FIELDS SEARCHED (IPC)** |

The present search report has been drawn up for all claims

| Place of search | Date of completion of the search | Examiner |
|---|---|---|
| The Hague | 12 February 2025 | Vaskimo, Kimmo |

EPO FORM 1503 03.82 (P04C01)

## ANNEX TO THE EUROPEAN SEARCH REPORT
## ON EUROPEAN PATENT APPLICATION NO.

EP 24 21 1511

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | | Publication date |
|---|---|---|---|---|
| WO 2023091664 A1 | 25-05-2023 | CN | 117897980 A | 16-04-2024 |
| | | EP | 4434252 A1 | 25-09-2024 |
| | | US | 2024259879 A1 | 01-08-2024 |
| | | WO | 2023091664 A1 | 25-05-2023 |
| US 2021258866 A1 | 19-08-2021 | NONE | | |
| WO 2023153898 A1 | 17-08-2023 | US | 2024406939 A1 | 05-12-2024 |
| | | WO | 2023153898 A1 | 17-08-2023 |
| US 2021377804 A1 | 02-12-2021 | NONE | | |

For more details about this annex : see Official Journal of the European Patent Office, No. 12/82

EPO FORM P0459